# EUROPÄISCHE PATENTSCHRIFT

(11) **EP 3 672 029 B1**
(45) Veröffentlichungstag und Bekanntmachung des Hinweises auf die Patenterteilung: **24.03.2021**
(21) Anmeldenummer: 18214148.1
(22) Anmeldetag: 19.12.2018
(51) Int. Cl.: H02K 3/487, H02K 9/19

(54) **NUTVERSCHLUSS EINER ELEKTRISCHEN MASCHINE, KRONENKÜHLER FÜR EINE ELEKTRISCHE MASCHINE, ELEKTRISCHE MASCHINE UND VERFAHREN ZUM HERSTELLEN EINES KRONENKÜHLERS**
ELECTRIC MACHINE, SLOT SEAL FOR AN ELECTRIC MACHINE, CROWN COOLER FOR AN ELECTRIC MACHINE AND METHOD FOR PRODUCING A CROWN COOLER
FERMETURE D'ENCOCHE D'UNE MACHINE ÉLECTRIQUE, COURONNE DE REFROIDISSEMENT POUR UNE MACHINE ÉLECTRIQUE, MACHINE ÉLECTRIQUE ET PROCÉDÉ DE FABRICATION D'UNE COURONNE DE REFROIDISSEMENT

(43) Veröffentlichungstag der Anmeldung: 24.06.2020
(73) Patentinhaber: Compact Dynamics GmbH, 82319 Starnberg (DE)
(72) Erfinder: Sontheim, Johann, 82346 Andechs-Machtlfing (DE)
(74) Vertreter: Schornack, Oliver

(56) Entgegenhaltungen:
- DE-A1-102015 012 913

## Beschreibung

Die vorliegende Erfindung betrifft einen Nutverschluss für eine elektrische Maschine. Insbesondere betrifft die vorliegende Erfindung einen Nutverschluss mit einem Turbulator. Ferner betrifft die vorliegende Erfindung einen Kronenkühler für eine elektrische Maschine, der eine Vielzahl von Nutverschlüssen aufweist, sowie eine elektrische Maschine mit solch einem Nutverschluss oder Kronenkühler und ein Verfahren zum Herstellen eines Kronenkühlers.

Nutverschlüsse elektrischer Maschinen dienen in erster Linie dem Schutz von in einer Statornut angeordneten elektrischen Leiterwicklungen. Dabei schützen Nutverschlüsse die Wicklungen zum einen vor mechanischen Beschädigungen und zum anderen vor einem ungewollten Herausrutschen aus der Statornut. So ist aus der DE 10 2005 030 877 A1 ein Nutverschluss für eine elektrische Maschine bekannt, der zum Verschluss einer Nutöffnung mit einer Leiteranordnung einsetzbar ist. Der Nutverschluss weist auf einer der Leiteranordnung zugewandten Seite eine verformbare Wölbung auf, die der Fixierung der Leiteranordnung dient. In einer spezifischen Ausführungsform ist der Nutverschluss mit einem offenporigen Material ausgefüllt, um das Fixieren der Wicklungen zu verbessern.

In den von den Nutverschlüssen geschützten Wicklungen kommt es in elektrischen Maschinen in Abhängigkeit der Stromdichte in den Wicklungen zu hohen Temperaturen. Diese führen zu ohmschen Verlusten und beschränken somit die Leistungsfähigkeit des Motors. In dieser Hinsicht schlägt die GB 2505909 A eine Kühlkomponente für elektrische Maschinen vor, wobei in der Kühlkomponente ein Rohr zum Transportieren von Kühlmittel angeordnet ist und die Kühlkomponente in einer Nut des Stator der elektrischen Maschine durch Gießen oder Aushärten gebildet wird.

Die DE 10 2015 012 913 A1 betrifft einen zylinderförmigen Käfig aus Kühlrohren, die an einem gemeinsamen ringförmigen Rohrträger angeschlossen sind und die zwischen Statorzähnen einer elektrischen Maschine angeordnet werden, beispielsweise können die Kühlrohre nach dem Aufbringen von Wicklungen in den Stator eingeschoben werden. An ihrem dem Rohrträger gegenüberliegenden freien Ende sind die Kühlrohre verschlossen, wobei sie jeweils in Längsrichtung durch eine entsprechend eingebrachte Komponente in einen ersten Kühlmittelkanal und einen zweiten Kühlmittelkanal unterteilt sind, die an dem freien Ende des jeweiligen Kühlrohrs fluidisch verbunden sind.

Es ist die Aufgabe der vorliegenden Erfindung einen Nutverschluss bereitzustellen, der eine verbesserte Kühlleistung aufweist. Ferner liegt der Erfindung die Aufgabe zugrunde, eine mit einem derartigen Nutverschluss ausgestattete elektrische Maschine sowie ein Verfahren zum Herstellen mindestens eines solchen Nutverschlusses anzugeben.

Die Aufgabe wird durch einen Nutverschluss mit den Merkmalen des Anspruchs 1 und auch durch einen Kronenkühler gemäß Anspruch 4 sowie eine elektrische Maschine mit den Merkmalen des Anspruchs 13 und ein Verfahren zur Herstellung eines Kronenkühlers mit den Merkmalen des Anspruchs 14 gelöst.

Bevorzugte Ausführungsformen sind in den abhängigen Ansprüchen definiert.

Gemäß einem Aspekt zum besseren Verständnis der vorliegenden Offenbarung umfasst ein Nutverschluss für eine elektrische Maschine, die einen Stator mit wenigstens einer Statornut umfasst, wobei in der Statornut wenigstens eine elektrische Statorwicklung aufgenommen ist, und wobei der Nutverschluss die wenigstens eine Statornut zumindest abschnittsweise verschließt, wenigstens einen von einem Fluid durchströmbaren Kühlkanal zum Kühlen der Statorwicklung. Ferner umfasst der Nutverschluss einen Turbulator, der in dem Kühlkanal angeordnet ist und dazu eingerichtet ist, mittels mehrerer Verwirbelungselemente und/oder eines spiralförmig angeordneten durchgängigen Verwirbelungselements das durch den Kühlkanal strömende Fluid zu verwirbeln.

Im Gegensatz dazu entsteht bei einem herkömmlichen Nutverschluss aufgrund der axialen Ausrichtung eines Rohrs zur Führung eines Kühlmediums durch den Nutverschluss, der bedingt durch den Aufbau des Stators der elektrischen Maschine ebenfalls axial seine größte Erstreckung aufweist, eine überwiegend laminare Strömung des Kühlmediums in dem Rohr. Dadurch wird erwärmtes Kühlmedium im äußeren Randbereich des Rohrs axial transportiert, wodurch im Zentrum des Rohrs das Kühlmedium keine oder nur eine geringe Wärmeaufnahme erfährt.

Aufgrund der Anordnung eines Turbulators in dem Kühlkanal gemäß dem ersten Aspekt der vorliegenden Offenbarung wird eine laminare Strömung des durch den Kühlkanal strömenden Fluids (Kühlmediums) vermieden. Dadurch kann Wärme von der Wandung des Kühlkanals besser in das gesamte Fluid übertragen werden. Durch die räumliche Nähe des Kühlkanals zu wenigstens einer angrenzenden Wicklung der elektrischen Maschine kann ein effektiver Abtransport von Wärme aus der entsprechenden wenigstens einen Wicklung über den wenigstens einen Kühlkanal des Nutverschlusses ausgeführt werden.

Zudem kann der Nutverschluss die wenigstens eine angrenzende Wicklung zumindest abschnittsweise direkt berühren, was sich zusätzlich positiv auf den Wärmeabtransport auswirkt. Ein solcher Nutverschluss kann vorzugsweise in einer permanentmagneterregten elektrischen Maschine ausgeführt sein, die einen Rotor mit Permanentmagneten umfasst. Ferner kann ein Nutverschluss gemäß der vorliegenden Offenbarung auch in jeder anderen Art von elektrischen Maschinen vorgesehen werden, die zumindest eine Statornut umfasst. Bei der elektrischen Maschine kann es sich um einen Innenläufer oder Außenläufer handeln.

In einer Ausgestaltung kann der Turbulator einstückig mit einer Wandung des Kühlkanals gebildet sein. Der Nutverschluss kann aus einem Stück Material hergestellt werden. So kann der Nutverschluss, abgesehen von dem Kühlkanal, aus Vollmaterial gebildet sein. Ebenso kann eine den Kühlkanal formende Wandung und der Turbulator aus einem Stück Material gefertigt sein.

In einer Ausgestaltungsvariante kann der Nutverschluss im Wesentlichen ein nicht ferromagnetisches Material, ein elektrisch nicht leitfähiges Material und/oder ein Material mit hoher Wärmeleitfähigkeit aufweisen. Ferner kann der Nutverschluss im Wesentlichen eine technische Keramik, beispielsweise AlSiC oder AIN, einen Hochtemperatur-Thermoplast oder einen Duroplast mit hoher Wärmeleitfähigkeit aufweisen. Zur Steigerung der Wärmeleitfähigkeit kann eine wärmeleitende Materialbeimengung hinzugefügt werden. Ein Material für den Nutverschluss mit einer hohen Wärmeleitfähigkeit kann beispielsweise einen Wärmeleitwert von ca. 180W/mK oder mehr aufweisen, wie zum Beispiel AlN. Ein Nutverschluss aus Kunststoff, wie zum Beispiel einem Hochtemperatur-Thermoplast oder Duroplast (insbesondere mit Beimengung), weist einen Wärmeleitwert von 1 bis 20 W/mK oder mehr auf. Insbesondere kann der Wärmeleitwert des Materials des Nutverschlusses zwischen 1 bis 10 W/mK liegen und, abhängig von der Beimengung, zum Beispiel bei 0,5 bis 2,5 W/mK liegen. Eine solche Ausführungsform erlaubt dem Nutverschluss, die daran angrenzenden Wicklungen ohne Isolation direkt zu kontaktieren, wodurch der Wärmeabtransport aus den Wicklungen in den Kühlkanal des Nutverschlusses positiv beeinflusst wird. Insbesondere kann somit die Entstehung von Wirbelstromverlusten vermindert werden.

Optional kann der Kühlkanal an mindestens einem seiner axialen Enden eine Anschlussgeometrie zum Anschließen des Kühlkanals an ein Kühlsystem umfassen. Die Anschlussgeometrie kann dabei ebenfalls einstückig mit der Wandung des Kühlkanals und/oder dem Turbulator gebildet sein. Die jeweilige Anschlussgeometrie kann beispielsweise aus Keramik, Kunststoff oder einem metallischen Werkstoff mit hohem elektrischen Widerstand bestehen.

Weiter kann die Anschlussgeometrie koaxial oder in einem beliebigen Winkel zu dem Kühlkanal oder wenigstens einem Abschnitt des Kühlkanals des Nutverschlusses ausgebildet sein. Die jeweilige Anschlussgeometrie kann ferner dazu dienen, den wenigstens einen Kühlkanal des Nutverschlusses mit einem Kühlsystem zu verbinden.

Gemäß einer Ausgestaltungsvariante kann der Turbulator einen in Längsrichtung des Kühlkanals verlaufenden Kern und wenigstens ein an dem Kern des Turbulators angeordnetes, spiralförmiges, durchgängiges Verwirbelungselement und/oder mehrerer Verwirbelungselemente umfassen. In dieser Ausgestaltung kann der Turbulator ein gesondertes Bauteil bilden, dass in den Kühlkanal eines Nutverschlusses eingesetzt werden kann. Somit können auch bereits existierende Nutverschlüsse durch einen Turbulator ergänzt werden.

Alternativ (nicht erfindungsgemäß) oder zusätzlich kann der Turbulator wenigstens ein an einer Wand oder Wandung des Kühlkanal (eine den Kühlkanal bildende Wandung des Nutverschlusses) angeordnetes Verwirbelungselement umfassen. Mit anderen Worten wird der Turbulator ausschließlich durch das wenigstens eine Verbindungselement gebildet.

In jeder der Ausgestaltungsvarianten kann das Verwirbelungselement schräg zu einer Axialrichtung des Nutverschlusses angeordnet sein. Die Axialrichtung des Nutverschlusses verläuft parallel zu einer Längsachse des Nutverschlusses und im eingebauten Zustand des Nutverschlusses parallel zur Axialrichtung des Stators oder der elektrischen Maschine. Ein Verwirbelungselement zwingt das Fluid (Kühlmedium) in eine schräg zur Axialrichtung des Nutverschlusses ausgerichteten Strömungsrichtung, wodurch eine laminare Strömung verhindert wird und der Wärmeaustausch zwischen Fluid (Kühlmedium) und Wandung des Nutverschlusses und somit der zu kühlenden Statorkomponenten (Wicklungen, Statorzähne, Statorpakete etc.) verbessert wird.

Ferner können auch der Rotor und/oder im Falle einer permanentmagneterregten elektrischen Maschine die Magnete des Rotors mittels des Nutverschlusses gekühlt werden. Der Grund dafür ist die räumliche Nähe des Rotors zu dem Nutverschluss. Der Rotor und der Nutverschluss sind vorzugsweise lediglich durch einen Luftspalt getrennt, welcher im Betrieb hohe Luftspaltgeschwindigkeiten aufweisen kann und dadurch eine gute thermische Anbindung bietet. Aufgrund der zusätzlichen Kühlung von Magneten permanentmagneterregter elektrischer Maschinen können bevorzugt kostengünstige und hocheffiziente Magnete eingesetzt werden.

Besonders vorteilhaft ist, dass durch einen Nutverschluss gemäß der vorliegenden Offenbarung das Temperaturniveau der Wicklungen reduziert und somit ohmsche Verluste verringert werden können. Daher kann die Stromdichte in den Wicklungen deutlich erhöht werden, was sich positiv auf die Leistung und Effizienz der elektrischen Maschine auswirken kann.

In einer Ausgestaltungsvariante weist die Wandung des Nutverschlusses im Querschnitt des Nutverschlusses oder Kühlkanals eine im Wesentlichen gleich große

Wandstärke auf. Mit anderen Worten ist der Abstand zwischen einem beliebigen Punkt auf einer Außenseite des Nutverschlusses und einem zugehörigen Schnittpunkt einer auf dem beliebigen Punkt angeordneten Senkrechten (senkrecht zur Außenfläche des Nutverschlusses) mit der Innenseite der Wandung des Nutverschlusses (die den Kühlkanal bildende Wandung) gleich. Dies gilt für beliebigen Stellen des Nutverschlusses. Diese gleich große Wandstärke kann insbesondere in einem Bereich des Nutverschlusses vorgesehen sein, der sich innerhalb der Statornut und/oder radial seitlich zu einer Statorwicklung befindet. In axial darüber hinausgehenden Bereichen, beispielsweise einer Anschlussgeometrie, kann die Wandstärke variieren. Dies ermöglicht ein größtmögliches Volumen des Kühlkanals im Bereich der größten Wärmeentwicklung, wodurch die Durchflussmenge des Fluids (Kühlmediums) durch den Kühlkanal maximiert werden kann.

Alternativ oder zusätzlich weist die Wandung an der Außenseite des Nutverschlusses eine Form auf, die an die zu verschließende Nut angepasst ist. So kann eine außenliegenden Umfangslinie des Nutverschlusses (der äußere Querschnitt des Nutverschlusses) an jeder Stelle in axialer Richtung des Nutverschlusses dem Querschnitt der zu verschließenden Nut entsprechen. Beispielsweise kann der Nutverschluss ein prismatisches Profil aufweisen. Alternativ oder zusätzlich kann die außenliegende Umfangslinie des Nutverschlusses im Querschnitt an die Form der Statorpakete, Statorzähne, Statorwicklungen und gewünschten Luftspaltgeometrie im Querschnitt des Stators angepasst sein. Dadurch werden die Wicklungen passgenau in der Nut fixiert, während gleichzeitig, beispielsweise bei dünner und/oder gleicher Wandstärke, das für das Fluid (Kühlmedium) zur Verfügung stehende Volumen maximiert wird.

Gemäß einem weiteren Aspekt der vorliegenden Offenbarung kann eine verbesserte Kühlleistung für einen Stator einer elektrischen Maschine durch einen Kronenkühler erzielt werden. Auch hier kann die elektrische Maschine einen Stator umfassen, der eine Vielzahl von Statornuten umfasst, wobei in jeder Statornut wenigstens eine elektrische Statorwicklung aufgenommen ist. Dabei kann der Kronenkühler einen ersten Dichtflansch, der eine Stirnfläche aufweist, und eine Vielzahl von Nutverschlüssen, die auf einer ersten Seite des ersten Dichtflansches angeordnet sind, umfassen. Mindestens einer der Vielzahl von Nutverschlüssen weist wenigstens einen von einem Fluid durchströmbaren Kühlkanal zum Kühlen der entsprechenden Statorwicklung auf. Jeder Nutverschluss kann eine Statornut der Vielzahl von Statornuten mindestens abschnittsweise verschließen.

Ferner weist der erste Dichtflansch in der Stirnfläche mindestens eine Öffnung auf, die den Kühlkanal des mindestens einen Nutverschlusses mit einer der Vielzahl von Nutverschlüssen gegenüberliegenden Seite des ersten Dichtflansches fluidisch verbindet. Mit anderen Worten kann das Fluid durch die Öffnung in der Stirnfläche des ersten Dichtflansches in den Kühlkanal des Nutverschlusses strömen.

Der Dichtflansch kann an ein Kühlsystem angeschlossen sein, wobei Fluid (Kühlmedium) durch die Öffnung in den Kühlkanal des Nutverschlusses strömt. Insbesondere bei einer Vielzahl von Nutverschlüssen mit jeweils zugehörigem Kühlkanal wird das Fluid (Kühlmedium) zu jeder der Öffnungen in der Stirnfläche geleitet, wobei es für gewöhnlich umgelenkt wird, um durch die Öffnung in den Kühlkanal zu strömen. Durch diese Umlenkung wird eine Verwirbelungen des Fluids (Kühlmediums) bewirkt, die sich durch den Kühlkanal des zugehörigen Nutverschlusses fortsetzt. Die so vermiedene oder zumindest verringerte Ausbildung einer laminaren Strömung verbessert die Kühlleistung und somit die Effizienz der elektrischen Maschine.

Auch im Vergleich zu einzelnen Nutverschlüssen bietet der Kronenkühler Vorteile. Um einen einzelnen Nutverschluss an ein Kühlsystem anzuschließen, ist eine zylindrische Anschlussgeometrie von Vorteil, um umlaufend eine gleichmäßige Dichtigkeit herzustellen. Diese zylindrische Anschlussgeometrie fördert jedoch eine laminare Strömung innerhalb des Kühlkanals des Nutverschlusses. Auch kann ein Querschnittssprung zwischen Anschlussgeometrie und Kühlkanal im Nutverschluss zu Strömungsablösungen und/oder Totwasserbereichen führen, wodurch der Wärmeübergangskoeffizient zwischen Wandung des Nutverschlusses und Fluid (Kühlmedium) verschlechtert wird. Der Kronenkühler erlaubt eine Öffnung in der Stirnfläche, die dem Querschnitt des Kühlkanals im Nutverschluss entspricht, sodass keine Querschnittssprünge vorhanden sind. Wenn die Öffnung eine dem Querschnitt des Kühlkanals entsprechende Form aufweist, wird die Verwirbelung des Fluids (Kühlmediums) an der Öffnung nicht durch eine Anschlussgeometire oder andere Querschnittsveränderung in Fließrichtung des Fluids verringert und kann sich so durch den gesamten Kühlkanal fortsetzen.

Ein weiterer Vorteil des Kronenkühlers ist die Vereinfachung der Herstellung der elektrischen Maschine. Durch den kronenförmigen Aufbau (bestehend aus Dichtflansch und einer Vielzahl von Nutverschlüssen) können alle Nutverschlüsse des Kronenkühlers gleichzeitig in entsprechende Nuten des Stators eingeführt werden. Somit entfällt ein Einsetzen und Ausrichten der einzelnen Nutverschlüsse innerhalb der Statornuten. Ferner entfällt das einzelne Anschließen jedes Nutverschlusses an ein Kühlsystem. Dadurch wird die benötigte Zeit zum Herstellen des Stators für eine elektrische Maschine, insbesondere hochpoligen elektrischen Maschinen, signifikant reduziert.

In einer Ausgestaltungsvariante ist der Kronenkühler einstückig hergestellt. So kann der gesamte Kronenkühler (Dichtflansch und Vielzahl von Nutverschlüssen) aus ein und demselben Material hergestellt sein. Dadurch entfällt das Anschließen jedes einzelne Nutverschlusses an ein Kühlsystem, da lediglich der Dichtflansch an das Kühlsystem angeschlossen werden muss. Zudem entfällt eine große Anzahl von Dichtstellen und Dichtungen, wodurch die Möglichkeit einer Leckage (insbesondere im Hinblick auf wechselnde Temperaturbelastungen) drastisch reduziert wird. Auch wird der Kronenkühler stabiler, insbesondere während des Einführens in die Statornuten. Hierfür kann der Kronenkühler in einem Arbeitsvorgang hergestellt werden. Beispielsweise kann der Kronenkühler mittels 3D-Druckverfahren gefertigt werden. Alternativ kann der Dichtflansch und die Nutverschlüsse getrennt hergestellt werden und anschließend an den Dichtflansch angeschlossen werden. Beispielsweise können die Nutverschlüsse mittels Schweißen, Kleben, etc. am Dichtflansch befestigt werden.

In einer weiteren Ausgestaltungsvariante kann die Stirnfläche des Dichtflansches eine Fläche einer kreisförmigen oder ringförmigen Scheibe sein, wobei die Vielzahl von Nutverschlüssen an der kreisförmigen oder ringförmigen (d.h. kreisringförmigen) Scheibe vorgesehen ist und jede oder die eine Öffnung sich durch die kreisförmige oder ringförmige Scheibe erstreckt (d.h. eine Durchgangsöffnung) und direkt in einen Kühlkanal eines Nutverschlusses mündet. Mit anderen Worten kann an jedem Nutverschluss auf eine Anschlussgeometrie verzichtet werden und jeder Nutverschluss endet an der kreisförmigen oder ringförmigen Scheibe oder geht nahtlos in diese über.

Ferner kann der Dichtflansch ausschließlich aus der kreisförmigen Scheibe bestehen, die an ihrer außenliegenden Umfangsseite an einen Abschnitt eines Kühlsystems angeschlossen wird. Im Fall einer ringförmigen Scheibe kann diese an ihrer außenliegenden und innenliegenden Umfangsseite an einen Abschnitt eines Kühlsystems angeschlossen werden. Beispielsweise kann der Abschnitt des Kühlsystems aus einem zylinderförmigen Bauteil bzw. einem doppelzylinderförmigen Bauteil bestehen, in das die kreisförmige bzw. ringförmige Scheibe eingesetzt wird. Lediglich an der außenliegenden bzw. auch innenliegenden Umfangsseite der Scheibe muss diese gegenüber dem Abschnitt des Kühlsystems abgedichtet werden.

Selbstverständlich kann der Dichtflansch auch aus einer regelmäßig oder unregelmäßig mehreckigen (dreieckigen, viereckigen, etc.) Scheibe hergestellt sein. Dabei kann die außenliegende Umfangsseite auch eine andere Form aufweisen als die innenliegende Umfangsseite. Der Dichtflansch kann dabei an eine Form der elektrischen Maschine und/oder ihres Gehäuses optimal angepasst werden.

Alternativ oder zusätzlich kann der erste Dichtflansch ein erstes Ringelement und ein zu dem ersten Ringelement konzentrisch angeordnetes zweites Ringelement umfassen. Dabei ist die Stirnfläche eine kreisringförmige Stirnfläche, die zwischen dem ersten Ringelement und dem zweiten Ringelement angeordnet ist. Selbstverständlich kann anstatt erstem und zweitem Ringelement auch ein erstes und zweites Prisma vorgesehen sein, insbesondere wenn die Stirnfläche eine polygonale Form aufweist. Solche Ringelemente (Prismen) erhöhen die Stabilität des Kronenkühlers und ermöglichen ein einfacheres Einsetzen des Dichtflansches in einem Abschnitt eines Kühlsystems.

Gemäß einer Ausgestaltungsvariante können das erste und zweite Ringelement und die kreisringförmige Stirnfläche einen ringförmigen Fluidkanal bilden, der über die mindestens eine Öffnung mit dem Kühlkanal des mindestens einen Nutverschlusses fluidisch verbunden ist. Optional kann dabei das erste Ringelement auf einer Innenseite und/oder einer dem zweiten Ringelement zugewandten Außenseite ein Dichtelement aufweisen. Alternativ oder zusätzlich kann das zweite Ringelement auf einer Außenseite und/oder einer dem ersten Ringelement zugewandten Innenseite ein Dichtelement aufweisen. Die Dichtelemente können als O-Ring, Dichtband oder ähnliches ausgebildet sein. So können größere und damit zuverlässigere Dichtflächen zu dem Abschnitt des Kühlsystems geschaffen werden als dies bei einzelnen Dichtungen an den einzelnen Nutverschlüssen möglich ist. Der Kronenkühler ist somit nicht nur robuster, sondern auch zuverlässiger im Betrieb.

Der Fluidkanal (Ringspalt) kann beabstandete zu der Stirnfläche durch den Abschnitt des Kühlsystems und/oder einen Teil eines Gehäuses des Stators und/oder der elektrischen Maschine geschlossen sein. In diesem Abschnitt des Kühlsystems und/oder Teil eines Gehäuses kann ein Einlauf oder Auslauf vorgesehen sein, durch den Fluid (Kühlmedium) in den Fluidkanal strömt oder aus dem Fluidkanal strömt. Durch den ringförmigen Fluidkanal wird eine Fluidströmung erzeugt, die schräg (oder senkrecht) zur Längsachse eines Kühlkanals in einem Nutverschluss verläuft, sodass eine Verwirbelungen beim Eintreten in den Kühlkanal (durch die Öffnung) erzeugt wird.

Alternativ oder zusätzlich kann das erste Ringelement und/oder das zweite Ringelement (bzw. erstes und/oder zweites Prisma) eine Aussparung oder Öffnung aufweisen, durch die von einem Kühlsystem bereitgestelltes Fluid (Kühlmedium) in den Fluidkanal strömen kann. In dieser Ausgestaltung kann der Dichtflansch optional noch ein weiteres kreisförmiges oder kreisringförmiges Element (oder entsprechendes polygonales Element) aufweisen, welches der Stirnfläche gegenüberliegt und den Fluidkanal verschließt. Dadurch kann Fluid (Kühlmedium) durch die Öffnung im Ringelement (oder Prisma) in den Fluidkanal (Ringspalt) einströmen und durch die Öffnung(en) in der Stirnfläche in die einzelnen Kühlkanäle der Nutverschlüsse weiterströmen. Somit muss der Dichtflansch lediglich an der Öffnung im Ringelement/Prisma an das Kühlsystem angeschlossen werden. Hierbei kann optional eine Anschlussgeometrie an dem Ringelement/Prisma innen- und/oder außenseitig zum Fluidkanal vorgesehen sein.

In einer weiteren Ausgestaltungsvariante kann der erste Dichtflansch ferner ein zwischen dem ersten und zweiten Ringelement und konzentrisch zu dem ersten und zweiten Ringelement angeordnetes drittes Ringelement umfassen, das mindestens eine Öffnung und eine von der Stirnfläche beabstandete Verbindungswand, die das dritte Ringelement mit dem ersten Ringelement verbindet, umfasst. Das dritte Ringelement kann mit dem ersten Ringelement und der Verbindungswand einen ersten ringförmigen Fluidkanalabschnitt, und mit dem zweiten Ringelement einen zweiten (konzentrischen) ringförmigen Fluidkanalabschnitt begrenzen. Mit anderen Worten liegt das dritte Ringelement zwischen dem ersten und zweiten Ringelement und unterteilt den Zwischenraum zwischen dem ersten und zweiten Ringelement in zwei Fluidkanalabschnitte, wobei ein Fluidkanalabschnitt im Bereich der Öffnung teilweise auch auf der Höhe des anderen Fluidkanalabschnitts liegt.

Ferner kann der erste ringförmige Fluidkanalabschnitt über die mindestens eine Öffnung mit dem Kühlkanal mindestens eines Nutverschlusses fluidisch verbunden sein, und der zweite ringförmige Fluidkanalabschnitt über die Öffnung in dem dritten Ringelement und über eine der mindestens einen Öffnung in der Stirnfläche mit dem Kühlkanal mindestens eines weiteren Nutverschlusses fluidisch verbunden sein. Dadurch lässt sich ein Kühlkanal eines ersten Nutverschlusses als Zulauf verwenden und ein Kühlkanal eines zweiten Nutverschlusses als Rücklauf verwenden. Der erste und zweite ringförmige Fluidkanalabschnitt können entsprechend als Zulauf- bzw. Rücklaufsammler dienen. Alternativ können der erste und zweite ringförmige Fluidkanalabschnitt in Umfangsrichtung in verschiedene Abschnitte getrennt sein, sodass die Kühlkanäle der Nutverschlüsse in beliebiger Art und Weise seriell oder parallel fluidisch gekoppelt werden können. Ebenfalls alternativ oder zusätzlich können die Kühlkanäle mindestens zweier Nutverschlüsse an unterschiedliche Kühlkreisläufe angeschlossen werden, wenn der erste und zweite ringförmige Fluidkanalabschnitt an einen jeweiligen Kühlkreislauf angeschlossen sind.

Alternativ oder zusätzlich kann auch der Kühlkanal eines Nutverschlusses und die zugehörige Öffnung in der Stirnfläche durch eine in Längsrichtung des Nutverschlusses verlaufende Trennwand jeweils in einen ersten und zweiten Abschnitt getrennt werden. Mit anderen Worten verläuft die Trennwand in Längsrichtung des Nutverschlusses durch den Nutverschluss und auch durch das die Stirnfläche bildende Bauteil, sodass auch die Öffnung in der Stirnfläche in zwei Abschnitte getrennt wird. Dies ermöglicht, dass der erste ringförmige Fluidkanalabschnitt über den ersten Abschnitt der Öffnung in der Stirnfläche mit dem ersten Abschnitt des Kühlkanals des Nutverschlusses fluidisch verbunden ist, und der zweite ringförmige Fluidkanalabschnitt über die Öffnung in dem dritten Ringelement und über den zweiten Abschnitt der Öffnung in der Stirnfläche mit dem zweiten Abschnitt des Kühlkanals des Nutverschlusses fluidisch verbunden ist.

Dadurch lässt sich der erste Abschnitt des Kühlkanals als Zulauf verwenden und der zweite Abschnitt des Kühlkanals als Rücklauf verwenden. Beispielsweise kann der durch die Trennwand aufgeteilte Nutverschluss an einem dem ersten Dichtflansch gegenüberliegenden freien Ende verschlossen sein, und die Trennwand beabstandet von dem Ende des Nutverschlusses enden. Mit anderen Worten sind der erste und zweite Abschnitt des Kühlkanals in dem aufgeteilten Nutverschluss am freien Ende des Nutverschlusses fluidisch miteinander gekoppelt. Der erste und zweite ringförmige Fluidkanalabschnitt können entsprechend als Zulauf- bzw. Rücklaufsammler dienen. Alternativ können der erste und zweite ringförmige Fluidkanalabschnitt in Umfangsrichtung in verschiedene Abschnitte getrennt sein, sodass die Kühlkanäle der Nutverschlüsse in beliebiger Art und Weise seriell oder parallel fluidisch gekoppelt werden können. Ebenfalls alternativ oder zusätzlich können die Abschnitte des Kühlkanals desselben Nutverschlusses an unterschiedliche Kühlkreisläufe angeschlossen werden, wenn der erste und zweite ringförmige Fluidkanalabschnitt an den jeweiligen Kühlkreislauf angeschlossen sind.

In einer weiteren Ausgestaltungsvariante umfasst der Kronenkühler einen zweiten Dichtflansch, der eine Stirnfläche aufweist, wobei der zweite Dichtflansch in der Stirnfläche mindestens eine Öffnung aufweist, die den Kühlkanal des mindestens einen Nutverschlusses mit einer der Vielzahl von Nutverschlüssen gegenüberliegenden Seite des zweiten Dichtflansches fluidisch verbindet. Für den zweiten Dichtflansch gelten die für den ersten Dichtflansch beschriebenen Ausgestaltungsvarianten, Alternativen, Optionen, etc. gleichermaßen. Durch den zweiten Dichtflansch wird die Stabilität des Kronenkühlers deutlich verbessert, da die einzelnen Nutverschlüsse beidseitig durch die beiden Dichtflansche gehalten werden. Ferner entfallen jegliche Dichtungen an den Enden der einzelnen Nutverschlüsse und werden durch (größere und) einfacher zu gestaltende Dichtungen an den Dichtflanschen ersetzt.

In einer anderen Ausgestaltungsvariante kann der zweite Dichtflansch einen kleineren Umfang als der erste Dichtflansch aufweisen. Dies ermöglicht ein Einschieben des Kronenkühlers in den Stator. Insbesondere wenn der Außenumfang des zweiten Dichtflansches kleiner ist als der Innenumfang der Statorpakete oder Statorzähne, lässt sich der Kronenkühler mit dem zweiten Dichtflansch voran in den Stator einführen, wobei die Nutverschlüsse des Kronenkühlers in die Nuten des Stator eingeschoben werden.

Der Innenumfang des zweiten Dichtflansches kann dabei so gewählt werden, dass er mit dem Rotor oder zumindest einem Abschnitt des Rotors, der sich in der fertig montierten elektrischen Maschine auf Höhe des zweiten Dichtflansches befindet, nicht kollidiert.

Ferner kann der erste und/oder zweite Dichtflansch so gestaltet sein, dass er axial die Statorpakete überragt (also in axialer Richtung außerhalb des Stators angeordnet ist). Hierbei kann der jeweilige Dichtflansch so angeordnet und dimensioniert sein, dass er sich auf Höhe eines Lagers für den Rotor befindet. Dadurch lassen sich die Lager für den Rotor durch das Fluid (Kühlmedium), welches durch den Dichtflansch strömt, kühlen. Alternativ oder zusätzlich kann der erste und/oder zweite Dichtflansch so angeordnet und dimensioniert sein, dass es sich auf der Höhe der Wicklungsköpfe (Enden der Statorwicklungen) und/oder einer Wicklungsverschaltung befindet. Dadurch lassen sich auch die Wicklungsköpfe bzw. die Wicklungsverschaltung effizient kühlen. All dies ermöglicht eine sehr kompakte Bauform der elektrischen Maschine bei gleichzeitig effizienter Kühlung.

In einer Ausgestaltungsvariante kann der erste und/oder zweite Dichtflansch mehrere Fluidkanäle aufweisen, wobei nur ein Teil der Kühlkanäle mit einem der Fluidkanäle fluidisch gekoppelt ist. Beispielsweise können in dem ersten und/oder zweiten Dichtflansch, insbesondere in einem darin gebildeten Fluidkanal, Trennelemente vorhanden sein, die den Fluidkanal in unterschiedliche fluidisch voneinander getrennte Abschnitte einteilen. Entsprechend kann der Dichtflansch mehrere Öffnungen aufweisen, durch die Fluid (Kühlmedium) von/zu einem Kühlsystem in die einzelnen Bereiche des Fluidkanals einströmen oder ausströmen kann. Dadurch können die Kühlkanäle der Nutverschlüsse durch unterschiedliche Kühlkreisläufe mit Fluid (Kühlmedium) versorgt werden, wodurch eine bessere Kühlung der elektrischen Maschine möglich ist.

Alternativ oder zusätzlich kann der erste und/oder zweite Dichtflansch in Umfangsrichtung mindestens einmal unterbrochen sein und auf der der Vielzahl von Nutverschlüssen gegenüberliegenden Seite der Stirnfläche einen geschlossenen Fluidkanalabschnitt aufweisen, der die zu mindestens zwei benachbarten Nutverschlüssen zugehörigen Öffnungen fluidisch verbindet. Mit anderen Worten sind die Kühlkanäle mindestens zweier benachbarter Nutverschlüsse an mindestens einem Ende der Kühlkanäle fluidisch miteinander gekoppelt, sodass Fluid (Kühlmedium) durch den Kühlkanal mindestens eines Nutverschlusses zu dem ersten und/oder zweiten Dichtflansch in einer ersten Axialrichtung strömt und durch einen Kühlkanal mindestens eines benachbarten Nutverschlusses zu dem anderen des ersten und/oder zweiten Dichtflansches in einer zweiten Axialrichtung strömt, wobei die zweite Axialrichtung der ersten Axialrichtung entgegengesetzt ist.

So kann der wenigstens eine Kühlkanal eines Nutverschlusses des Kronenkühlers mäanderförmig mit wenigstens einem weiteren Kühlkanal eines weiteren Nutverschlusses des Kronenkühlers verschaltet sein. Auf diese Weise kann beispielsweise die gesamte elektrische Maschine oder zumindest Teilsegmente der elektrischen Maschine miteinander verschaltet sein. Dies kann ebenfalls durch ein oder mehrere Trennelemente in dem Fluidkanal des ersten und/oder zweiten Dichtflansches erzielt werden, das/die den Fluidkanal in dem ersten und/oder zweiten Dichtflansch in unterschiedliche fluidisch voneinander getrennte Abschnitte unterteilt, wobei mindestens zwei benachbarte Öffnungen in der Stirnfläche durch den Fluidkanalabschnitt fluidisch gekoppelt sind.

Eine mäanderförmige Verschaltung von Kühlkanälen kann auch bei der Ausgestaltungsvariante erfolgen, bei der der Kühlkanal eines Nutverschlusses durch eine Trennwand in zwei Abschnitte unterteilt wird. Beispielsweise kann ein Kronenkühler gebildet werden, der nur einen Dichtflansch aufweist, und die Kühlkanäle (Kühlkanalabschnitte) zweier oder mehrerer Nutverschlüsse nacheinander von dem Fluid (Kühlmedium) durchströmt werden.

In einer weiteren Ausgestaltungsvariante kann der Kronenkühler mindestens einen Nutverschluss aufweisen, der dem ersten Aspekt oder einer Ausgestaltungsvariante, Alternative, Option, etc. des ersten Aspekts entspricht.

Beispielsweise kann der Kronenkühler mindestens einen Turbulator, der in dem Kühlkanal des mindestens einen Nutverschlusses angeordnet ist umfassen. Dabei kann der Turbulator dazu eingerichtet sein, das durch den Kühlkanal des mindestens einen Nutverschlusses strömende Fluid zu verwirbeln.

In einer Ausgestaltungsvariante kann der Turbulator einen Kern umfassen, der als Trennwand des Kühlkanals in dem Nutverschluss dient, sodass durch den Turbulator der Kühlkanal des Nutverschlusses in einen ersten und zweiten Abschnitt aufgeteilt werden kann.

In einer weiteren Ausgestaltungsvariante kann der Kronenkühler im Wesentlichen ein nicht ferromagnetisches Material, ein elektrisch nicht leitfähiges Material und/oder ein Material mit hoher Wärmeleitfähigkeit aufweisen. Beispielsweise kann eine technische Keramik (wie zum Beispiel AlSiC oder AIN), ein Hochtemperatur-Thermoplast, ein Hochtemperatur-Thermoplast mit wärmeleitender Materialbeimengungen und/oder ein Duroplast mit hoher Wärmeleitfähigkeit (mit oder ohne wärmeleitender Materialbeimengungen) für das Material des Kronenkühlers verwendet werden. Ein Material für den Kronenkühler mit einer hohen Wärmeleitfähigkeit kann beispielsweise einen Wärmeleitwert von ca. 180W/mK oder mehr aufweisen, wie zum Beispiel AIN. Ein Kronenkühler aus Kunststoff, wie zum Beispiel einem Hochtemperatur-Thermoplast oder Duroplast (insbesondere mit Beimengung), weist einen Wärmeleitwert von 1 bis 20 W/mK oder mehr auf. Insbesondere kann der Wärmeleitwert des Materials des Kronenkühlers zwischen 1 bis 10 W/mK liegen und, abhängig von der Beimengung, zum Beispiel bei 0,5 bis 2,5 W/mK liegen. Eine solche Ausführungsform erlaubt jedem Nutverschluss des Kronenkühlers, die daran angrenzenden Wicklungen ohne Isolation direkt zu kontaktieren, wodurch der Wärmeabtransport aus den Wicklungen in den Kühlkanal des Nutverschlusses positiv beeinflusst wird. Insbesondere kann somit die Entstehung von Wirbelstromverlusten vermindert werden.

In jeder der entsprechenden Ausgestaltungsvarianten, Alternativen und Optionen kann der Abschnitt des Kühlsystems ein Teil eines Gehäuses der elektrischen Maschine sein. Dabei kann durch Anbringen des Teils des Gehäuses eine fluiddichte Kopplung mit dem Dichtflansch hergestellt werden, wodurch der Aufbau und Zusammenbau der elektrischen Maschine vereinfacht wird. Mit anderen Worten wird durch Anbringen des Teils des Gehäuses der Fluidkanal in dem Dichtflansch vervollständigt.

Gemäß einem weiteren Aspekt der vorliegenden Offenbarung umfasst eine elektrische Maschine einen Stator, wobei der Stator wenigstens eine Statorwicklung sowie entsprechende Statornuten umfasst. Dabei kann wenigstens eine Statornut einen Nutverschluss nach dem ersten Aspekt (und/oder einer der zugehörigen Ausgestaltungsvarianten) aufweisen oder der Stator einen Kronenkühler nach dem zweiten Aspekt (und/oder einer der zugehörigen Ausgestaltungsvarianten) aufweisen. Ferner kann der Kronenkühler mindestens einige oder alle Statornuten des Stators durch einen entsprechenden Nutverschluss des Kronenkühlers verschließen.

In einer Ausgestaltungsvariante kann zwischen dem Nutverschluss und an den Nutverschluss angrenzenden Komponenten oder zwischen der Vielzahl von Nutverschlüssen des Kronenkühlers und an die Vielzahl von Nutverschlüssen angrenzenden Komponenten eine Wärmeleitpaste, ein Tränklack, ein Kleber oder ein Verguss zur Optimierung des Wärmeübergangs zwischen dem Nutverschluss oder der Vielzahl von Nutverschlüssen und den angrenzenden Komponenten vorgesehen sein.

In einer weiteren Ausgestaltungsvariante kann der Nutverschluss und/oder der Kronenkühler an ein Kühlsystem angebunden sein. Über das Kühlsystem kann der Nutverschluss und/oder der Kronenkühler vorzugsweise seriell oder parallel mit einem Wärmetauscher der elektrischen Maschine verbunden sein. Dadurch muss kein zusätzliches Kühlsystem für den Kühlkanal des Nutverschlusses und/oder des Kronenkühlers ausgeführt werden und es kann ein möglicherweise bereits vorhandenes Kühlsystem genutzt werden. Des Weiteren können die an den Nutverschluss (auch an den Nutverschluss des Kronenkühlers) angrenzenden Wicklungen durch eine Anbindung an einen Wärmetauscher der elektrischen Maschine von mehreren Seiten gekühlt werden. Vorzugsweise können die in einer Statornut angeordneten, an den Nutverschluss angrenzenden Wicklungen von oben, unten und von zwei Seiten gekühlt werden.

Gemäß einem anderen Aspekt umfasst ein Verfahren zur Herstellung eines Kronenkühlers ein Herstellen eines ersten Dichtflansches, der eine Stirnfläche und in der Stirnfläche mindestens eine Öffnung aufweist, und ein Herstellen einer Vielzahl von Nutverschlüssen auf einer ersten Seite des ersten Dichtflansches, wobei mindestens einer der Vielzahl von Nutverschlüssen wenigstens einen von einem Fluid durchströmbaren Kühlkanal aufweist. Dabei kann die mindestens eine Öffnung in dem ersten Dichtflansch den Kühlkanal des mindestens einen Nutverschlusses mit einer Dichtflansches fluidisch verbinden.

In einer Ausgestaltungsvariante kann das Verfahren ferner ein Herstellen eines zweiten Dichtflansches umfassen, der eine Stirnfläche und in der Stirnfläche mindestens eine Öffnung aufweist, die den Kühlkanal des mindestens einen Nutverschlusses mit einer der Vielzahl von Nutverschlüssen gegenüberliegenden Seite des zweiten Dichtflansches fluidisch verbindet.

Alternativ oder zusätzlich kann das Verfahren ferner ein Verschweißen oder Verkleben des ersten Dichtflansches und der Vielzahl von Nutverschlüssen und/oder ein Verschweißen oder Verkleben des zweiten Dichtflansches und der Vielzahl von Nutverschlüssen umfassen. Hierbei werden der Dichtflansch und die Nutverschlüsse zunächst getrennt hergestellt und anschließend mittels Verschweißen oder Verkleben zusammengefügt. Somit kann ein einstückiger Kronenkühler hergestellt werden.

Alternativ oder zusätzlich können zumindest einige oder alle Herstellschritte (also das Herstellen eines ersten Dichtflansches, das Herstellen einer Vielzahl von Nutverschlüssen und/oder das Herstellen eines zweiten Dichtflansches) in einem Laser-Sinter-Prozess durchgeführt werden, sodass der Kronenkühler ebenfalls einstückig hergestellt wird. Mit anderen Worten kann der Kronenkühler mittels 3D-Druckverfahren hergestellt werden.

Ebenfalls alternativ oder zusätzlich können zumindest einige oder alle Herstellschritte mit einem Thermoplast-Material, in das ein wärmeleitendes Material oder anderer Füllstoff eingearbeitet ist, durchgeführt werden. Beispielsweise kann das wärmeleitenden Material eine Keramik, Graphit, Bornitrid oder eine Kombination daraus sein.

Der Gegenstand der vorliegenden Offenbarung ist nicht auf die beschriebenen Aspekte und Ausgestaltungsvarianten in der angegebenen Form und Reihenfolge beschränkt. Vielmehr können insbesondere die Ausgestaltungsvarianten, Alternativen, Optionen, etc. - auch zwischen den beschriebenen Aspekten - beliebig kombiniert werden. Beispielsweise können alle Ausgestaltungsvarianten, Alternativen, Optionen, etc. des Nutverschlusses auch für den Kronenkühler und umgekehrt angewendet werden, und selbstverständlich auch alle Ausgestaltungsvarianten, Alternativen, Optionen, etc. der elektrischen Maschine für den Nutverschluss und/oder den Kronenkühler und umgekehrt angewendet werden. Die Erfindung im Rahmen Offenbarung ist durch die unabhängigen Ansprüche definiert.

Nachfolgend werden beispielhafte Ausgestaltungen zum besseren Verständnis der Erfindung anhand der Zeichnungen beschrieben, wobei
- Figur 1: schematische Schnittansichten eines Nutverschlusses für eine elektrische Maschine zeigt,
- Figur 2: schematisch eine perspektivische Ansicht einer Vielzahl von Nutverschlüssen zeigt,
- Figur 3: schematisch eine perspektivische Ansicht eines Kronenkühlers mit einer Vielzahl von Nutverschlüssen zeigt,
- Figur 4: schematisch eine perspektivische Ansicht des Kronenkühlers aus Figur 3 aus einer anderen Blickrichtung zeigt,
- Figur 5: schematisch eine perspektivische Ansicht eines Turbulators zeigt,
- Figur 6: schematisch eine perspektivische Ansicht eines Kronenkühlers mit zwei Dichtflanschen zeigt,
- Figur 7: schematisch perspektivische Ansichten eines Kronenkühlers mit Dichtflansch und unterbrochenem zweiten Dichtflansch (zum Umlenken von Fluid) zeigt,
- Figur 8: schematische perspektivische Ansichten eines Kronenkühlers mit Dichtflansch und mit Nutverschlüssen, deren Kühlkanal mittels Trennwand in Abschnitte unterteilt ist, zeigt,
- Figur 9: schematisch eine Ansicht und Schnittansichten des Kronenkühlers aus Figur 8 zeigt,
- Figur 10: schematisch perspektivische Ansichten eines Teils einer elektrischen Maschine in verschiedenen Zuständen während des Einsetzens eines Kronenkühlers zeigt, und
- Figur 11: schematisch ein Ablaufdiagramm eines Verfahrens zum Herstellen eines Kronenkühlers zeigt.

Komponenten, die in den Figuren mehrfach ausgebildet sind und dieselbe Funktion und Ausführung aufweisen, werden im Folgenden jeweils exemplarisch anhand einer Komponente beschrieben. Die zugehörigen Beschreibungen und Ausführungen können demnach auch auf die weiteren, gleichartigen Komponenten übertragen werden. Zudem sind nicht alle gleichartigen Komponenten mit Bezugszeichen versehen, um die Figuren übersichtlicher zu gestalten.

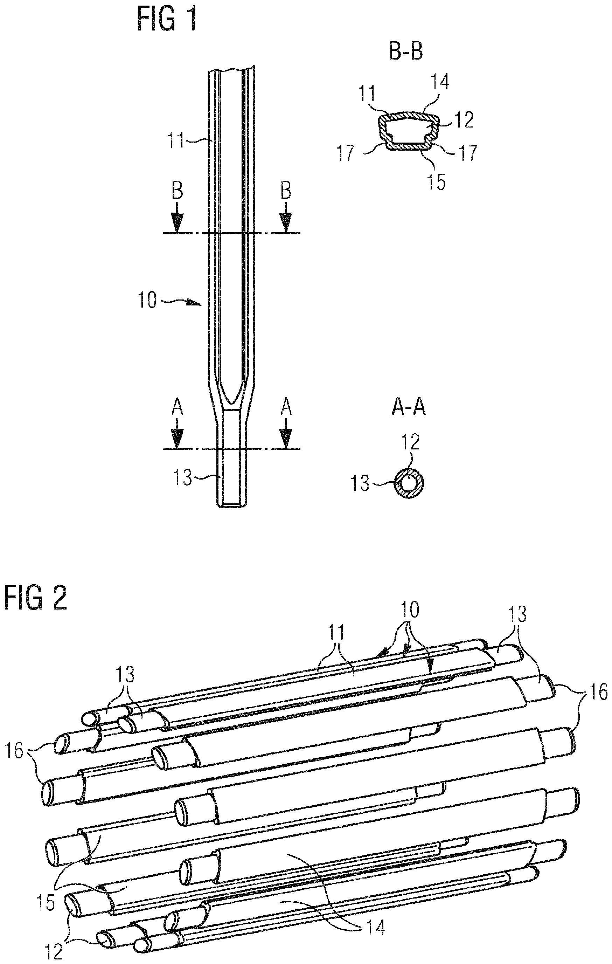

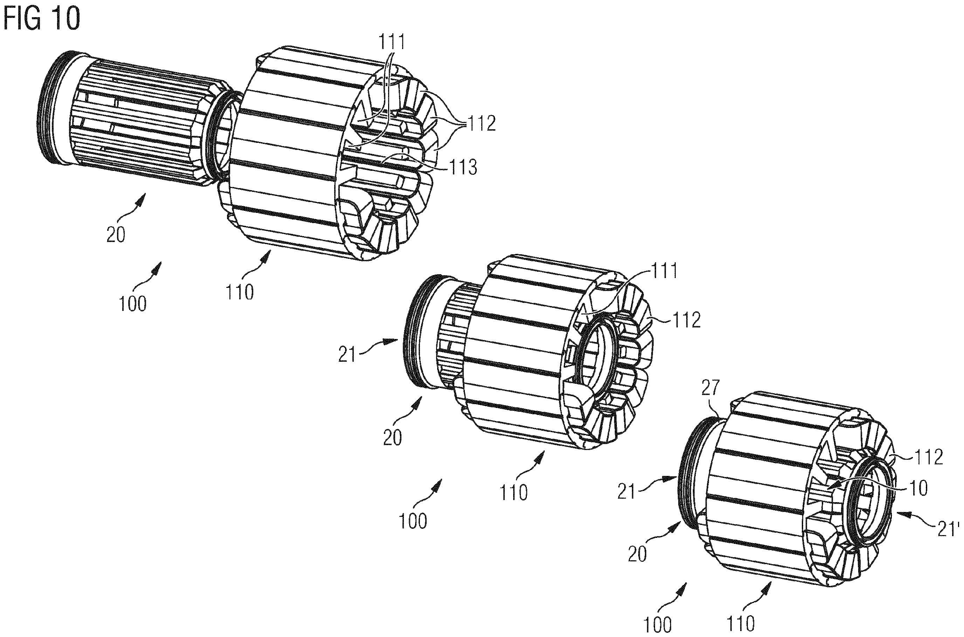

Figur 1 zeigt schematisch Schnittansichten eines Nutverschlusses 10 entlang und quer zur Längsrichtung des Nutverschlusses 10. Der Nutverschluss 10 eignet sich für eine elektrische Maschine 100 (Figur 10), die einen Stator 110 mit wenigstens einer Statornut 111 umfasst, wobei in der Statornut 111 wenigstens eine elektrische Statorwicklung 112 aufgenommen ist und wobei der Nutverschluss 10 die wenigstens eine Statornut 111 zumindest abschnittsweise verschließt. Der Nutverschluss 10 umfasst wenigstens einen von einem Fluid durchströmbaren Kühlkanal 12, wodurch die Statorwicklung 112 sowie andere Bereiche des Stators 110 gekühlt werden können.

Der Teil des Nutverschlusses 10, der eine Statornut 111 zumindest abschnittsweise verschließt, ist in Längsrichtung des Nutverschlusses 10 mittig angeordnet. Dieser Teil des Nutverschlusses 10 weist eine Wandung 11 des Kühlkanals 12 auf, die im Querschnitt (B - B) an die Statornut 111 angepasst ist, um diese optimal zu verschließen. So kann die Wandung 11 mindestens einen Abschnitt 14 aufweisen, der eine Statorwicklung 112 berührt. Gegenüber dem Abschnitt 14 weist die Wandung 11 einen weiteren Abschnitt 15 auf, der eine Öffnung der Statornut 111 schließt. Der Abschnitt 15 bildet beispielsweise eine Abgrenzung zu einem Luftspalt, der sich zwischen dem Stator 110 und einem Rotor (nicht gezeigt) der elektrischen Maschine 100 befindet. In oder an dem Abschnitt 15 können Vorsprünge und/oder Einbuchtungen 17 vorgesehen sein, die jeweils mit einer entsprechenden Einbuchtung und/oder Vorsprung des Stator 110 (insbesondere eines Statorpakets oder Statorzahns) korrespondieren, sodass der Nutverschluss 10 in radialer Richtung des Stators 110 die Nut 111 sicher verschließt.

Der Nutverschluss 10 kann aus Vollmaterial hergestellt sein, wobei der Nutverschluss 10 lediglich aus der Wandung 11 besteht. Um den Kühlkanal 12 an ein Kühlsystem (nicht gezeigt) der elektrischen Maschine 100 oder ein gesondertes Kühlsystem (ebenfalls nicht gezeigt) anzuschließen, kann der Nutverschluss 10 eine Anschlussgeometrie 13 aufweisen. Um eine möglichst gute und kostengünstig herzustellende Dichtung zu ermöglichen, kann die Anschlussgeometrie 13 zylinderförmig ausgebildet sein (siehe Schnitt A - A).

Figur 2 zeigt schematisch eine Vielzahl von Nutverschlüssen 10 in einer perspektivischen Ansicht, wie sie beispielsweise in einem Stator (in Figur 2 nicht dargestellt) angeordnet sein können. Dabei kann jeder Nutverschluss 10 an jedem der beiden gegenüberliegenden Enden eine Anschlussgeometrie 13 aufweisen. Hierfür kann auf oder an der Anschlussgeometrie 13 eine Dichtung 16 vorgesehen sein, die mit einem entsprechenden Gegenstück (nicht gezeigt) einen fluiddichten Anschluss an das Kühlsystem gewährleistet.

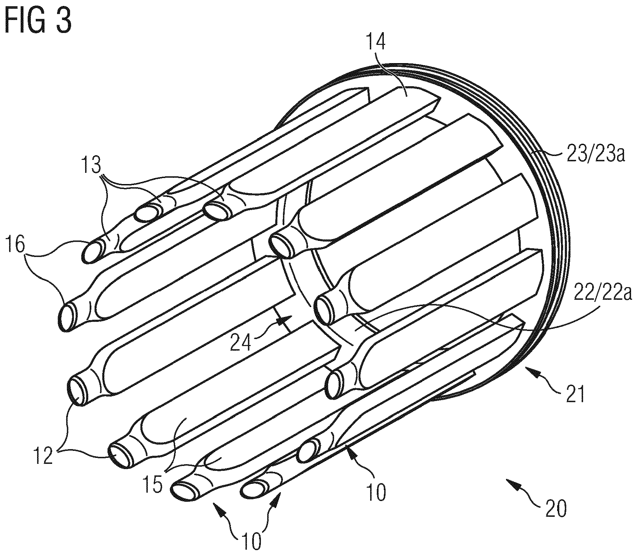

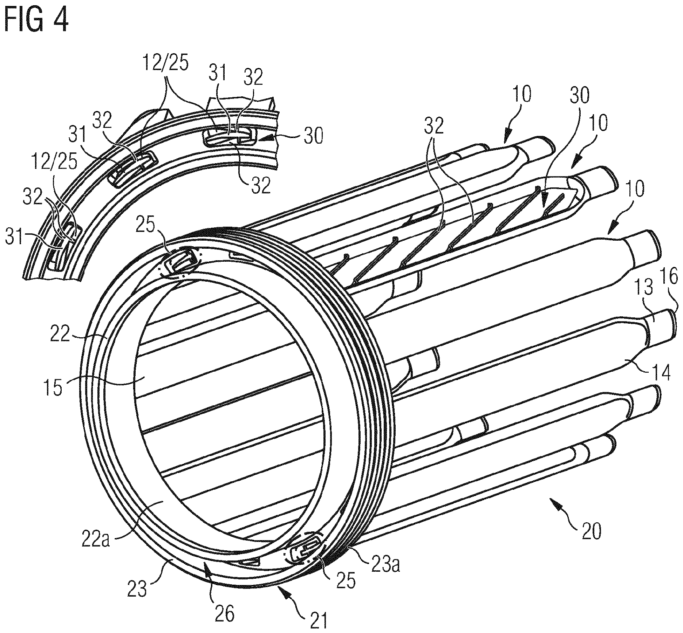

Figur 3 zeigt schematisch eine perspektivische Ansicht eines Kronenkühlers 20 mit einer Vielzahl von Nutverschlüssen 10 und einem Dichtflansch 21. Figur 4 zeigt schematisch eine perspektivische Ansicht des Kronenkühlers 20 aus Figur 3 aus einer anderen Blickrichtung sowie eine Detailansicht eines Dichtflansches des Kronenkühlers. Der Kronenkühler 20 eignet sich ebenfalls für eine elektrische Maschine 100 der eingangs beschriebenen Art, wobei in jeder Statornut 111 neben einer elektrischen Statorwicklung 112 einer der Vielzahl von Nutverschlüssen 10 angeordnet sein kann, um die Statornut 111 zu verschließen.

Dabei kann der Abschnitt 14 der Wandung 11 jedes Nutverschlusses 10 nach außen weisen, da auf dieser Seite des Kronenkühlers 20 die jeweilige Statorwicklung 112 liegt. Der innenseitig angeordnete Abschnitt 15 des jeweiligen Nutverschlusses 10 bildet zusammen mit den dazwischen liegenden Abschnitten des Stators 110 die Begrenzung eines Luftspaltes zum Rotor der elektrischen Maschine.

Der Dichtflansch 21 weist eine Stirnfläche 24 auf, worin mindestens eine Öffnung 25 vorgesehen ist. Die Öffnung 25 verbindet den Kühlkanal 12 eines Nutverschlusses 10 aus der Vielzahl von Nutverschlüssen 10 fluidisch mit einer der Vielzahl von Nutverschlüssen 10 gegenüberliegenden Seite des Dichtflansches 21. Wie insbesondere in Figur 4 zu sehen ist, wird die Stirnfläche 24 von einem kreisringförmigen Element gebildet, auf dessen einer Seite (siehe Figur 3) die Vielzahl von Nutverschlüssen 10 angeordnet ist, und auf dessen gegenüberliegender Seite (siehe Figur 4) die Öffnung 25 eine fluidische Verbindung in den Kühlkanal 12 des Nutverschlusses 10 ermöglicht. Die Öffnung 25 kann dabei eine Form aufweisen, die dem Querschnitt des Kühlkanals 12 in dem zugehörigen Nutverschluss 10 entspricht. Mit anderen Worten ist der Kühlkanal 12 des Nutverschlusses 10 durch den die Stirnfläche 24 bildenden Teil des Dichtflansches 21 hindurch verlängert und endet mit der Öffnung 25 an der Stirnfläche 24.

Der Dichtflansch 21 kann ferner ein erstes Ringelement 22 und ein zu dem ersten Ringelement 22 konzentrisch angeordnetes zweites Ringelement 23 umfassen. Die kreisringförmige Stirnfläche 24 ist dabei zwischen dem ersten und zweiten Ringelement 22, 23 angeordnet. Die Ringelemente 22, 23 dienen insbesondere der einfachen Anordnung von Dichtungen 22a, 23a, die in Figur 4 innenseitig an dem ersten Ringelement 22 bzw. außenseitig an dem zweiten Ringelement 23 vorgesehen sind. Selbstverständlich können Dichtungen 22a, 23a zusätzlich oder alternativ außen am ersten Ringelement 22 und innen an zweiten Ringelement 23 vorgesehen sein. Die Ringelemente 22, 23 und Dichtungen 22a, 23a dienen einem einfachen Anschließen des Kronenkühlers 20 an ein Kühlsystem (nicht dargestellt). Beispielsweise kann der Dichtflansch 21 in einen entsprechenden kreisringförmigen Schlitz eines Abschnitts des Kühlsystems und/oder eines Gehäuses (nicht dargestellt) der elektrischen Maschine 100 eingesetzt werden, wobei durch den Schlitz Fluid (Kühlmedium) in einen zwischen den Ringelementen 22, 23 gebildeten Fluidkanal 26 des Kronenkühlers 20 und weiter durch die mindestens eine Öffnung 25 in den Kühlkanal 20 mindestens eines Nutverschlusses 10 geleitet werden kann. Dadurch entfallen Anschlussgeometrien 13, wie sie auf der dem Dichtflansch 21 gegenüberliegenden Seite an jedem Nutverschluss 10 vorgesehen sind.

In Figur 4 ist ferner die Anordnung eines Turbulators 30 in einem Kühlkanal 12 eines Nutverschlusses 10 dargestellt. Der Turbulator 30 kann selbstverständlich auch in einem Kühlkanal 12 eines Nutverschlusses 10 aus Figur 1 und 2 vorgesehen sein. Der Turbulator 30 weist wenigstens ein Verwirbelungselement 32 auf, welches sich schräg zu einer Längsachse des Nutverschlusses 10 angeordnet in dem Kühlkanal 12 befindet. Dadurch werden laminare Strömungen in Längsrichtung des Kühlkanals 12 vermieden oder zumindest verringert.

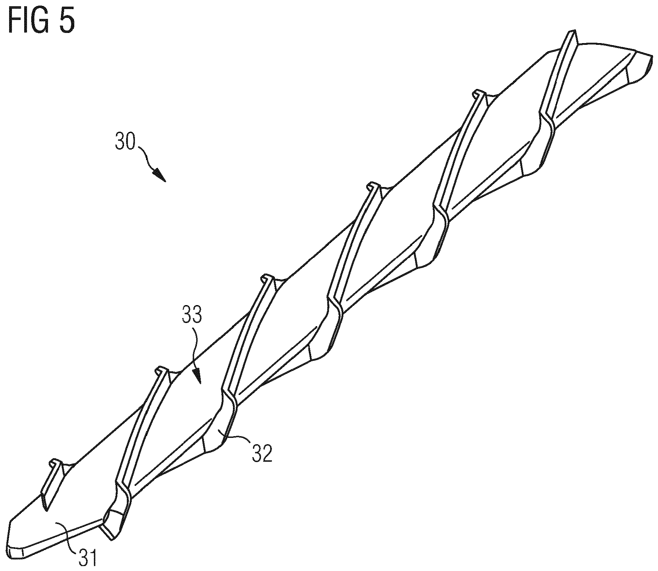

In der in Figur 4 dargestellten Variante des Turbulators 30 weist dieser einen in Längsrichtung des Kühlkanal 12 verlaufenden Kern 31 und wenigstens ein an den Kern 31 des Turbulators 30 angeordnetes Verwirbelungselement 32 auf. Ein solcher Turbulator 30 mit Kern 31 ist in Figur 5 schematisch in einer perspektivischen Ansicht gezeigt. Der Turbulator 30 umfasst erfindungsgemäß mehrere Verwirbelungselemente 32 und/oder ein spiralförmig angeordnetes durchgängiges Verwirbelungselement 32.

Dadurch entstehen schräg zur Längsrichtung des Kühlkanal 12 angeordnete Kühlkanalabschnitte 33. Das Verwirbelungselement 32 kann dabei so dimensioniert sein, dass es die Innenseite der Wandung 11 des Kühlkanals 12 berührt, sodass der Kühlkanal 12 auf die spiralförmig angeordneten Kühlkanalabschnitte 33 beschränkt ist. Selbstverständlich können die Verwirbelungselemente 32 (entgegen der in Figur 5 dargestellten Variante) so vorgesehen sein, dass mehrere voneinander getrennte spiralförmige Kühlkanalabschnitte 33 entstehen (Mehrfachwendel).

Der Turbulator 30 kann einstückig mit einem Nutverschluss 10 hergestellt werden. Alternativ oder zusätzlich kann ein Turbulator 30 auch einstückig mit dem entsprechenden Nutverschluss 10 eines Kronenkühlers 20 hergestellt werden. Mit anderen Worten kann der Kronenkühler 20 einstückig sein. Dies lässt sich insbesondere durch ein Laser-Sinter-verfahren (3D-Druckverfahren) umsetzen.

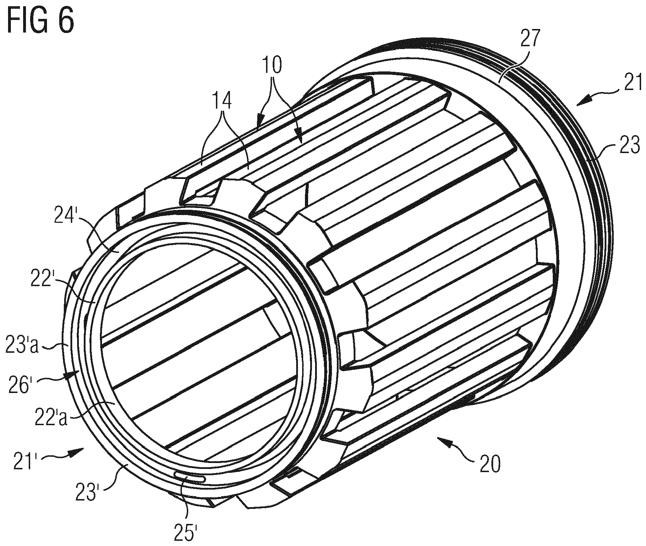

Figur 6 zeigt schematisch eine perspektivische Ansicht eines Kronenkühlers 20 mit zwei Dichtflanschen 21, 21'. Der Kronenkühler 20 kann im Wesentlichen dem Kronenkühler 20 aus den Figuren 3 und 4 entsprechen und ebenfalls (optional) einen Turbulator in mindestens einem der Nutverschlüsse enthalten. Der zweite Dichtflansch 21' kann in gleicher Weise aufgebaut sein wie der erste Dichtflansch 21. Beispielsweise kann eine Stirnfläche 24' vorgesehen sein, in der mindestens eine Öffnung 25' ist, die den Kühlkanal 12 des mindestens einen Nutverschlusses 10 mit einer der Vielzahl von Nutverschlüssen 10 gegenüberliegenden Seite des zweiten Dichtflansches 21' fluidisch verbindet.

Auch der zweite Dichtflansch 21' kann ein erstes und zweites Ringelement 22', 23' mit dazwischenliegendem Fluidkanal 26' aufweisen. Ebenfalls optional können Dichtungen 22a', 23a' innenliegend und/oder außenliegend an einem oder beiden der Ringelemente 22', 23' vorgesehen sein.

Um den Kronenkühler 20 ungehindert in den Stator 110 einzubringen, weist der zweite Dichtflansch 21' einen kleineren Umfang auf als der erste Dichtflansch 21. Der Außendurchmesser des zweiten Ringelements 23' muss dabei kleiner sein als der Innendurchmesser des Stators 110 (mit anderen Worten kleiner als die äußere Begrenzung des Luftspaltes zwischen Stator 110 und Rotor). Hierbei können die Nutverschlüsse 10 am dem zweiten Dichtflansch 21' zugewandten Ende schräg zu deren Längsachse nach innen geformt sein, um die Kühlkanäle 12 zu dem zweiten Dichtflansch 21' und den darin vorgesehenen Öffnungen 25' zu führen.

Der zweite Dichtflansch 21' kann in axialer Richtung des Kronenkühlers 20 so angeordnet sein, dass er sich auf Höhe eines Lagers des Rotors befindet (beides nicht dargestellt), sodass das Lager ebenfalls gekühlt werden kann. Beispielsweise liegt der zweite Dichtflansch 21' in axialer Richtung außerhalb des Stators 110. Gleiches kann auch mit dem ersten Dichtflansch 21 erfolgen, um ein weiteres Lager des Rotors zu kühlen.

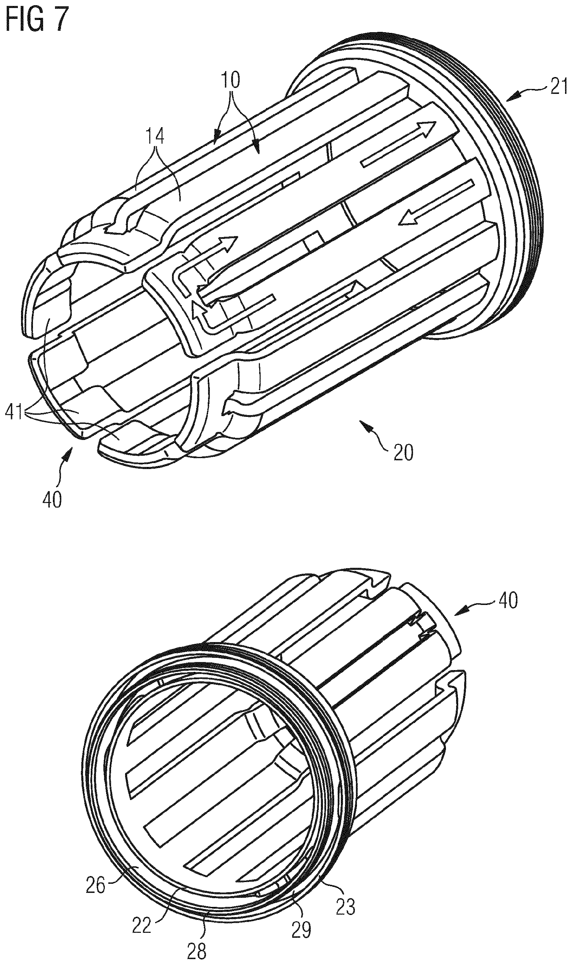

Figur 7 zeigt schematisch perspektivische Ansichten einer weiteren Variante eines Kronenkühlers 20. Hierbei ist eine Umlenkung 40 am Ende mindestens zweier Nutverschlüsse 10 vorgesehen. Die Umlenkung 40 kann im Wesentlichen dem Aufbau eines zweiten Dichtflansches 21' entsprechen, wobei dieser in Umfangsrichtung unterbrochen ist. Ferner weist die Umlenkung 40 (unterbrochener Dichtflansch 21') einen geschlossenen Fluidkanalabschnitt 41 auf, der die zu den mindestens zwei benachbarten Nutverschlüssen 10 zugehörigen Öffnungen 25' fluidisch verbindet. Hierbei sind keine Dichtelemente gegenüber einem Kühlsystem oder einem Gehäuse der elektrischen Maschine 100 notwendig. Durch die Umlenkung 40 wird Fluid (Kühlmedium) nach Durchströmen des Kühlkanals 12 mindestens eines Nutverschlusses 10 in den Kühlkanal mindestens eines weiteren Nutverschlusses 10 gelenkt, sodass das Fluid (Kühlmedium) zum ersten Dichtflansch 21 zurückströmt.

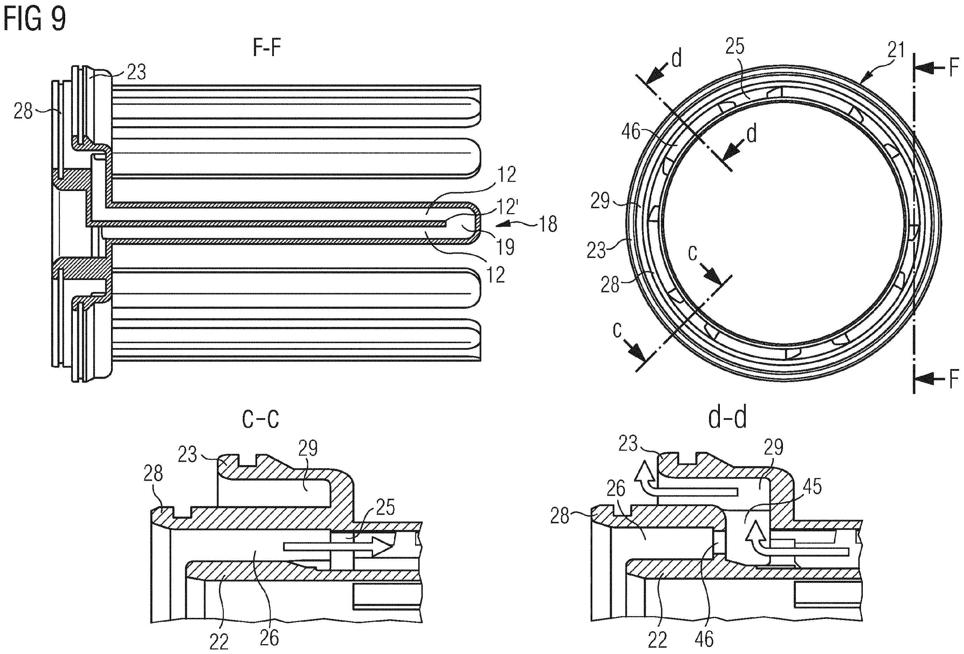

Um das Strömen des Fluids (Kühlmediums) durch mindestens zwei Nutverschlüsse 10 zu ermöglichen, ist am ersten Dichtflansch 21 eine abgewandelte Geometrie vorgesehen, als dies beim ersten Dichtflansch 21 des Kronenkühlers 20 aus den Figuren 3, 4 und 6 der Fall ist. Wie in Figur 7 zu erkennen, kann ein drittes Ringelement 28 vorgesehen sein, das zwischen dem ersten Ringelement 22 und dem zweiten Ringelement 23 und konzentrisch zu diesen Ringelementen 22, 23 angeordnet ist. Dadurch wird der Fluidkanal in dem ersten Dichtflansch 21 in einen ersten Fluidkanalabschnitt 26 und einen zweiten Fluidkanalabschnitt 29 unterteilt, wobei der erste Fluidkanalabschnitt 26 über mindestens eine Öffnung 25 in der Stirnfläche 24 mit einem oder mehreren Kühlkanälen 12 fluidisch verbunden ist, und der zweite Fluidkanalabschnitt 29 über mindestens eine andere Öffnung 25 in der Stirnfläche 24 mit einem oder mehreren Kühlkanälen 12 fluidisch verbunden ist. Die genaue Anschlussgeometrie zu den Kühlkanälen 12 in den Nutverschlüssen 10 wird in Bezug auf Figur 9 noch näher erläutert. Beispielsweise kann der erste Fluidkanalabschnitt 26 einen Zulauf für das Fluid (Kühlmedium) bilden kann, während der zweite Fluidkanalabschnitt 29 einen Ablauf für das Fluid (Kühlmittel) bilden kann, oder umgekehrt.

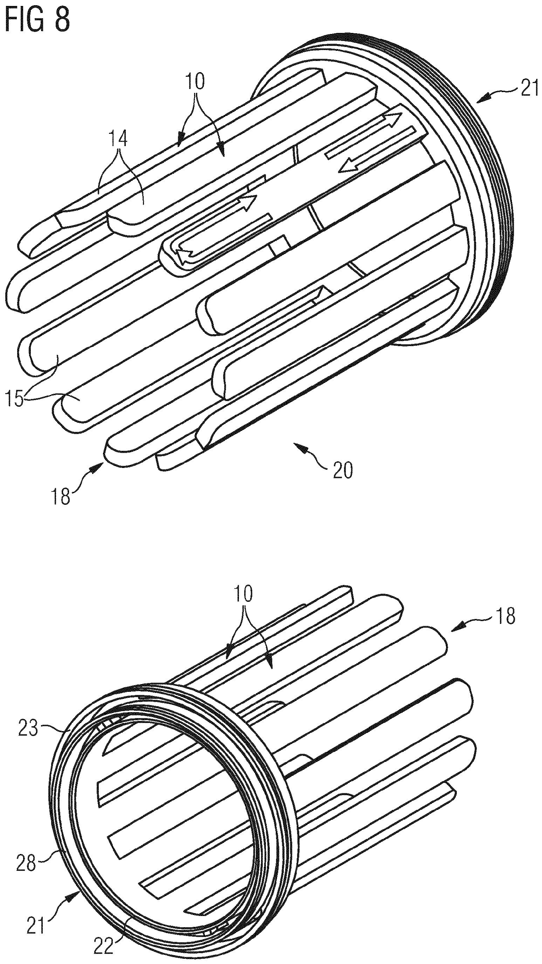

Figur 8 zeigt schematisch perspektivische Ansichten noch einer weiteren Variante eines Kronenkühlers 20. Dieser Kronenkühler 20 sieht einen ersten Dichtflansch 21 vor, an den Nutverschlüsse 10 angeschlossen oder integriert sind, deren Kühlkanäle 12 in Längsrichtung der Nutverschlüsse 10 in parallel zueinander verlaufende Abschnitte unterteilt. Diese Unterteilung ist detaillierter im Schnitt F - F der Figur 9 dargestellt. Die Nutverschlüsse 10 sind an einem dem ersten Dichtflansch 21 gegenüberliegenden (freien) Ende 18 geschlossen. Eine Trennwand 12', die in Längsrichtung des Kühlkanals 12 eines Nutverschlusses verläuft, unterteilt den Kühlkanal des Nutverschlusses in 2 Abschnitte. Beispielsweise kann sich die Trennwand 12' von dem Abschnitt 14 der Kühlkanalwandung 11 zu dem gegenüberliegenden Abschnitt 15 der Kühlkanalwandung 11 erstrecken und kann ferner mit jedem dieser Abschnitte 14, 15 fluiddicht verbunden sein.

Dabei kann sich die Trennwand 12' bis zu der Öffnung 25 in der Stirnfläche 24 erstrecken. An dem freien Ende 18 des Nutverschlusses 10 endet die Trennwand 12' beabstandet von der äußeren Wandung des freien Endes 18, sodass die beiden getrennten Abschnitte des Kühlkanals 12 in dem Bereich 19 fluidisch miteinander verbunden sind.

Insbesondere Figur 9 zeigt Details des ersten Dichtflansches 21, der neben dem ersten und zweiten Ringelement 22, 23 auch das dazwischenliegende dritte Ringelement 28 aufweist. Das dritte Ringelement 28 weist eine Öffnung 45 und eine von der Stirnfläche 24 beabstandete Verbindungswand 46 auf. Die Verbindungswand 46 verbindet das dritte Ringelement 28 mit dem ersten Ringelement 22 und befindet sich insbesondere im Bereich einer Öffnung 25 in der Stirnfläche 24. Dadurch begrenzt das dritte Ringelement 28 mit dem ersten Ringelement 22 und der Verbindungswand 46 einen ersten ringförmigen Fluidkanalabschnitt 26, und begrenzt zusammen mit dem zweiten Ringelement 23 einen zweiten ringförmigen Fluidkanalabschnitt 29.

Hierbei umfasst die Verbindungswand 46 einen Abschnitt, der zur Trennwand 12' hin verläuft und mit der Trennwand 12' in der Öffnung 25 verbunden ist oder einstückig mit dieser hergestellt ist. Ein weiterer Abschnitt der Verbindungswand 46 kann zu der Stirnfläche 24 hin verlaufen und mit dieser verbunden oder einstückig hergestellt sein. Mit anderen Worten umgibt die Verbindungswand 46 einen Abschnitt der Öffnung 25. So ist die Verbindungswand 46 in Umfangsrichtung des Dichtflansches 21 auf einer Seite neben der Öffnung 25 mit der Stirnfläche 24 verbunden (oder einstückig hergestellt) und auch mit der Trennwand 12' verbunden (oder einstückig hergestellt).

Gemäß der in Figur 9 dargestellten Variante ist der erste ringförmige Fluidkanalabschnitt 26 über einen ersten (durch die Trennwand 12' gebildeten) Abschnitt der Öffnung 25 in der Stirnfläche 24 mit dem ersten Abschnitt des Kühlkanals 12 des Nutverschlusses 10 fluidisch verbunden. Mit anderen Worten ist zwischen dem ersten Abschnitt des Kühlkanals 12 und dem ersten ringförmigen Fluidkanalabschnitt 26 eine Verbindung vorhanden, die der aus der Variante gemäß Figur 4 (ohne drittes Ringelement 28) entspricht. Ferner ist der zweite ringförmige Fluidkanalabschnitt 29 über die Öffnung 45 in dem dritten Ringelement 28 und über den zweiten Abschnitt der Öffnung 25 in der Stirnfläche 24 mit dem zweiten (durch die Trennwand 12' gebildeten) Abschnitt des Kühlkanals 12 des Nutverschlusses 10 fluidisch verbunden. Dadurch kann der erste ringförmige Fluidkanalabschnitt 26 beispielsweise als Zulauf von Fluid (Kühlmedium) in den ersten Abschnitt des Kühlkanals 12 dienen, während der zweite ringförmige Fluidkanalabschnitt 29 als Ablauf von Fluid (Kühlmedium) aus dem zweiten Abschnitt des Kühlkanals 12 dient, oder umgekehrt.

Der in Figur 9 dargestellte erste Dichtflansch 21 kann selbstverständlich auch bei der Variante des Kronenkühlers 20 gemäß Figur 7 mit Umlenkung 40 eingesetzt werden.

Hierfür umfasst die Verbindungswand 46 Abschnitte, die in Richtung der Stirnfläche 24 hin verlaufen. Dabei kann die Verbindungswand 46 in Umfangsrichtung des Dichtflansches 21 beidseitig neben der Öffnung 25 mit der Stirnfläche 24 verbunden oder einstückig mit dieser hergestellt sein. Beispielsweise kann die Verbindungswand 46 eine Verlängerung des Kühlkanals 12 eines Nutverschlusses 10 von der Stirnfläche 24 zu dem zweiten ringförmigen Fluidkanalabschnitt 29 bilden. Mit anderen Worten mündet der Kühlkanal 12 in die Öffnung 45 in dem dritten Ringelement 28. Die Verbindungswand 46 bildet also einen Fluidkanalabschnitt zwischen der Öffnung 25 in der Stirnfläche 24 und der Öffnung 45 in dem dritten Ringelement 28.

Anstatt benachbarter Abschnitte der Öffnung 25 in der Stirnfläche 24, wie in Figur 9 gezeigt, werden in dieser Variante ganze Öffnungen 25 in der Stirnfläche 24 mit dem ersten ringförmigen Fluidkanalabschnitt 26 oder den zweiten ringförmigen Fluidkanalabschnitt 29 fluidisch verbunden. So ist der erste ringförmige Fluidkanalabschnitt 26 über mindestens eine Öffnung 25 mit dem Kühlkanal 12 mindestens eines Nutverschlusses 10 fluidisch verbunden, während der zweite ringförmige Fluidkanalabschnitt 29 über die Öffnung 45 in dem dritten Ringelement 28 und über eine der mindestens einen Öffnung 25 in der Stirnfläche 24 mit dem Kühlkanal 12 mindestens eines weiteren Nutverschlusses 10 fluidisch verbunden. Beispielsweise kann der erste ringförmige Fluidkanalabschnitt 26 Fluid in einen Kühlkanal 12 leiten, welches über eine Umlenkung 40 in einen weiteren Kühlkanal 12 eines anderen Nutverschlusses 10 lenkt, wobei der weitere Kühlkanal 12 fluidisch mit dem zweiten ringförmigen Fluidkanalabschnitt 29 fluidisch gekoppelt ist.

Figur 10 zeigt schematisch perspektivische Ansichten eines Teils einer elektrischen Maschine 100 in verschiedenen Zuständen während des Einsetzens eines Kronenkühlers 20 in den Stator 110. Dabei kann es sich um den Kronenkühler 20 aus Figur 6 handeln, wie in Figur 10 gezeigt, oder alternativ auch um den Kronenkühler 20 aus einer der Figuren 3, 4, 7, 8 und 9. Bei der in Figur 10 dargestellten elektrischen Maschine 100 handelt es sich um einen Innenläufer, also eine elektrische Maschine 100, bei der der Rotor innerhalb des Stators 110 angeordnet ist.

Der Stator 110 weist Statornuten 111 auf, in denen Statorwicklungen 112 angeordnet sind. Zur besseren Übersichtlichkeit der Figur 7 sind nicht alle Statornuten 111 mit Statorwicklung(en) 112 dargestellt. Zwischen zwei Statorpaketen oder Statorzähnen und den eingesetzten Statorwicklungen 112 verbleibt ein Zwischenraum 113, der durch einen entsprechenden Nutverschluss 10 verschlossen wird. Aufgrund der radial angeordneten Statorpakete oder Statorzähnen läuft dieser Zwischenraum 113 zur Symmetrieachse des Status 110 konisch zusammen, sodass ein darin eingebrachter Nutverschluss 10 die Statorwicklungen 112 radial fixiert.

Wie den verschiedenen Zuständen während des Einsetzens des Kronenkühlers 20 in Figur 7 entnommen werden kann (von links nach rechts), passt der (optional vorgesehene) zweite Dichtflansch 21' innen durch den Stator 110. Die Nutverschlüsse 10 des Kronenkühlers 20 gleiten dabei durch den jeweiligen Zwischenraum 113 und verschließen die jeweilige Statornut 111. Der erste Dichtflansch 21 kann einen Vorsprung 27 aufweisen, durch den der Kronenkühler 20 an dem Stator 110 und/oder den Statorwicklungen 112 zum Anschlag kommt. Dadurch ist die Lage des Kronenkühlers 20 festgelegt, sodass die Nutverschlüsse 10 des Kronenkühlers 20 die Statornuten 111 bestmöglich verschließen. Ferner erlaubt der Vorsprung 27 eine Kontaktierung des Stators 110 und/oder der Statorwicklungen 112, sodass diese direkt gekühlt werden können. Selbstverständlich werden auch die Wickelköpfe der Statorwicklungen 112 und/oder Wicklungsschaltungen durch den ersten Dichtflansch 21 sowie den zweiten Dichtflansch 21' direkt oder indirekt gekühlt, da sich der erste und zweite Dichtflansch 21, 21' in deren (unmittelbarer) Nähe befinden.

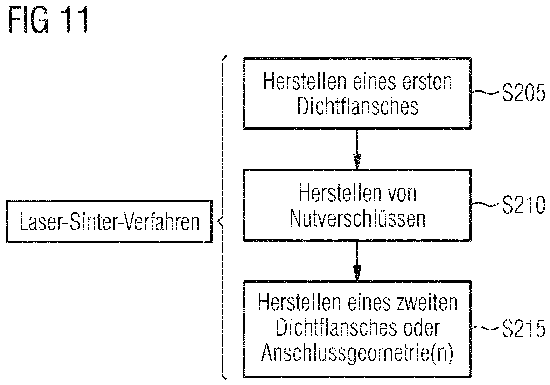

Figur 11 zeigt schematisch ein Ablaufdiagramm zum Herstellen eines Kronenkühlers 20. Teile des Kronenkühlers 20 oder der gesamte Kronenkühler 20 können mittels Spritzgussverfahren oder Laser-Sinter-Verfahren hergestellt werden. Teile des Kronenkühlers 20 können mittels Verkleben und/oder Verschweißen miteinander verbunden werden, um den Kronenkühler 20 zu bilden. Beispielsweise kann ein Thermoplast-Material durch einen Laser schichtweise gesintert werden und somit schichtweise den Kronenkühler 20 aufbauen. Vorzugsweise entspricht jede gesinterte Schicht einem Querschnitt in dem entsprechenden Abschnitt des Kronenkühlers 20, sodass der Kronenkühler 20 in axialer Richtung aufgebaut wird. Dem Thermoplast-Material kann auch ein wärmeleitfähiges Material beigemischt sein, sodass der gesinterte Kronenkühler 20 eine hohe Wärmeleitfähigkeit aufweist.

Somit kann das Verfahren in einem Schritt S205 mit dem Herstellen eines ersten Dichtflansches 21 beginnen. Dabei können zunächst Ringelemente 22, 23 hergestellt werden, gefolgt von einem eine Stirnfläche 24 bildenden Abschnitt. Anschließend kann/können in Schritt S210 mindestens ein Nutverschluss hergestellt werden. Der mindestens eine Nutverschluss umfasst dabei einen Kühlkanal 12 und erfindungsgemäß einen Turbulator 30 mit mehreren Verwirbelungselementen und/oder mit einem spiralförmig angeordneten durchgängigen Verwirbelungselement.

Schließlich kann ein zweiter Dichtflansch 21' in Schritt S215 hergestellt werden. Der zweite Dichtflansch 21' kann ebenfalls ein eine Stirnfläche 24' umfassendes Element sowie Ringelemente 22', 23' erhalten. Alternativ kann an jedem Ende jedes Nutverschlusses 10 eine Anschlussgeometrie 13 hergestellt werden, falls der Kronenkühler 20 keinen zweiten Dichtflansch 21' erhält.

## Patentansprüche

1. Nutverschluss (10) für eine elektrische Maschine (100), die einen Stator (110) mit wenigstens einer Statornut (111) umfasst, wobei in der Statornut (111) wenigstens eine elektrische Statorwicklung (112) aufgenommen ist, und wobei der Nutverschluss (10) die wenigstens eine Statornut (111) zumindest abschnittsweise verschließt, wobei der Nutverschluss (10) umfasst:
wenigstens einen von einem Fluid durchströmbaren Kühlkanal (12) zum Kühlen der Statorwicklung (112),
**dadurch gekennzeichnet, dass** der Nutverschluss (10) ferner umfasst:
einen Turbulator (30), der in dem Kühlkanal (12) angeordnet ist und dazu eingerichtet ist, das durch den Kühlkanal (12) strömende Fluid mittels mehrerer Verwirbelungselemente (32) und/oder eines spiralförmig angeordneten durchgängigen Verwirbelungselements (32) zu verwirbeln.

2. Nutverschluss (10) gemäß Anspruch 1, wobei der Turbulator (30) einstückig mit einer Wandung des Kühlkanals (12) gebildet ist.

3. Nutverschluss (10) gemäß Anspruch 1 oder 2, wobei der Turbulator (30) einen in Längsrichtung des Kühlkanals (12) verlaufenden Kern (31) umfasst, wobei wenigstens eines der Verwirbelungselemente (32) an dem Kern (31) des Turbulators (30) und/oder an einer Wand (11) des Kühlkanals (12) angeordnet ist, oder
wobei wenigstens eines der Verwirbelungselemente (32) an einer Wand (11) des Kühlkanals (12) angeordnet ist.

4. Kronenkühler (20) für eine elektrische Maschine (100), die einen Stator (110) mit einer Vielzahl von Statornuten (111) umfasst, wobei in jeder Statornut (111) wenigstens eine elektrische Statorwicklung (112) aufgenommen ist, wobei der Kronenkühler (20) umfasst:
einen ersten Dichtflansch (21), der eine Stirnfläche (24) aufweist, und
eine Vielzahl von Nutverschlüssen (10) gemäß einem der Ansprüche 1 bis 3, wobei die Nutverschlüsse (10) auf einer ersten Seite des ersten Dichtflansches (21) angeordnet sind,
wobei der erste Dichtflansch (21) in der Stirnfläche (24) mindestens eine Öffnung (25) aufweist, die den Kühlkanal (12) des mindestens einen Nutverschlusses (10) mit einer der Vielzahl von Nutverschlüssen (10) gegenüberliegenden Seite des ersten Dichtflansches (21) fluidisch verbindet.

5. Kronenkühler (20) gemäß Anspruch 4, wobei der Kronenkühler (20) einstückig hergestellt ist.

6. Kronenkühler (20) gemäß Anspruch 4 oder 5, wobei der erste Dichtflansch (21) umfasst:
ein erstes Ringelement (22), und
ein zu dem ersten Ringelement (22) konzentrisch angeordnetes zweites Ringelement (23),
wobei die Stirnfläche (24) eine kreisringförmige Stirnfläche (24) ist und zwischen dem ersten Ringelement (22) und dem zweiten Ringelement (23) angeordnet ist.

7. Kronenkühler (20) gemäß Anspruch 6, wobei das erste und zweite Ringelement (22, 23) und die kreisringförmige Stirnfläche (24) einen ringförmigen Fluidkanal (26) bilden, der über die mindestens eine Öffnung (25) mit dem Kühlkanal (12) des mindestens einen Nutverschlusses (10) fluidisch verbunden ist, und
wobei vorzugsweise das erste Ringelement (22) auf einer Innenseite und/oder einer dem zweiten Ringelement (23) zugewandten Außenseite ein Dichtelement (22a) aufweist, und das zweite Ringelement (23) auf einer Außenseite und/oder einer dem ersten Ringelement (22) zugewandten Innenseite ein Dichtelement (23a) aufweist.

8. Kronenkühler (20) gemäß Anspruch 6, wobei der erste Dichtflansch (21) ferner umfasst:
ein zwischen dem ersten und zweiten Ringelement (22, 23) und konzentrisch zu dem ersten und zweiten Ringelement (22, 23) angeordnetes drittes Ringelement (28), das mindestens eine Öffnung (45) und eine von der Stirnfläche (24) beabstandete Verbindungswand (46), die das dritte Ringelement (28) mit dem ersten Ringelement (22) verbindet, umfasst,
wobei das dritte Ringelement (28) mit dem ersten Ringelement (22) und der Verbindungswand (46) einen ersten ringförmigen Fluidkanalabschnitt (26), und mit dem zweiten Ringelement (23) einen zweiten ringförmigen Fluidkanalabschnitt (29) begrenzt, und
wobei der erste ringförmige Fluidkanalabschnitt (26) über die mindestens eine Öffnung (25) mit dem Kühlkanal (12) mindestens eines Nutverschlusses (10) fluidisch verbunden ist, und der zweite ringförmige Fluidkanalabschnitt (29) über die Öffnung (45) in dem dritten Ringelement (28) und über eine der mindestens einen Öffnung (25) in der Stirnfläche (24) mit dem Kühlkanal (12) mindestens eines weiteren Nutverschlusses (10) fluidisch verbunden ist, oder
wobei der Kühlkanal (12) eines Nutverschlusses (10) und die zugehörige Öffnung (25) in der Stirnfläche (24) durch eine in Längsrichtung des Nutverschlusses (10) verlaufende Trennwand (12') jeweils in einen ersten und zweiten Abschnitt getrennt werden, wobei der erste ringförmige Fluidkanalabschnitt (26) über den ersten Abschnitt der Öffnung (25) in der Stirnfläche (24) mit dem ersten Abschnitt des Kühlkanals (12) des Nutverschlusses (10) fluidisch verbunden ist, und der zweite ringförmige Fluidkanalabschnitt (29) über die Öffnung (45) in dem dritten Ringelement (28) und über den zweiten Abschnitt der Öffnung (25) in der Stirnfläche (24) mit dem zweiten Abschnitt des Kühlkanals (12) des Nutverschlusses (10) fluidisch verbunden ist.

9. Kronenkühler (20) gemäß einem der Ansprüche 4 bis 8, ferner umfassend:
einen zweiten Dichtflansch (21', 40), der eine Stirnfläche (24') aufweist,
wobei der zweite Dichtflansch (21', 40) in der Stirnfläche (24') mindestens eine Öffnung (25') aufweist, die den Kühlkanal (12) des mindestens einen Nutverschlusses (10) mit einer der Vielzahl von Nutverschlüssen (10) gegenüberliegenden Seite des zweiten Dichtflansches (21') fluidisch verbindet.

10. Kronenkühler (20) gemäß Anspruch 9, wobei der zweite Dichtflansch (21') einen kleineren Umfang aufweist als der erste Dichtflansch (21).

11. Kronenkühler (20) gemäß Anspruch 9 oder 10, wobei der zweite Dichtflansch (40) in Umfangsrichtung mindestens einmal unterbrochen ist und auf der der Vielzahl von Nutverschlüssen (10) gegenüberliegenden Seite der Stirnfläche (24') einen geschlossenen Fluidkanalabschnitt (41) aufweist, der die zu zwei benachbarten Nutverschlüssen (10) zugehörigen Öffnungen (25') fluidisch verbindet.

12. Kronenkühler (20) gemäß einem der Ansprüche 4 bis 11, ferner umfassend:
mindestens einen Turbulator (30), der in dem Kühlkanal (12) des mindestens einen Nutverschlusses (10) angeordnet ist und dazu eingerichtet ist, das durch den Kühlkanal (12) des mindestens einen Nutverschlusses (10) strömende Fluid zu verwirbeln.

13. Elektrische Maschine (100) mit einem Stator (110), wobei der Stator (110) wenigstens eine Statorwicklung (112) sowie entsprechende Statornuten (111) umfasst, und wobei wenigstens eine Statornut (111) einen Nutverschluss (10) nach einem der Ansprüche 1 bis 3 aufweist oder der Stator (110) einen Kronenkühler (20) nach einem der Ansprüche 4 bis 12 aufweist.

14. Verfahren zur Herstellung eines Kronenkühlers (20), umfassend:
Herstellen (S205) eines ersten Dichtflansches (21), der eine Stirnfläche (24) und in der Stirnfläche (24) mindestens eine Öffnung (25) aufweist; und
Herstellen (S210) einer Vielzahl von Nutverschlüssen (10) auf einer ersten Seite des ersten Dichtflansches (21), wobei mindestens einer der Vielzahl von Nutverschlüssen (10) wenigstens einen von einem Fluid durchströmbaren Kühlkanal (12) und einen Turbulator (30), der in dem Kühlkanal (12) angeordnet ist und dazu eingerichtet ist, das durch den Kühlkanal (12) strömende Fluid mittels mehrerer Verwirbelungselemente (32) und/oder eines spiralförmig angeordneten durchgängigen Verwirbelungselements (32) zu verwirbeln, aufweist,
wobei die mindestens eine Öffnung (25) in dem ersten Dichtflansch (21) den Kühlkanal (12) des mindestens einen Nutverschlusses (10) mit einer der Vielzahl von Nutverschlüssen (10) gegenüberliegenden Seite des ersten Dichtflansches (21) fluidisch verbindet.

15. Verfahren gemäß Anspruch 14, wobei
das Verfahren ferner ein Herstellen (S215) eines zweiten Dichtflansches (21') umfasst, der eine Stirnfläche (24') und in der Stirnfläche (24') mindestens eine Öffnung (25') aufweist, die den Kühlkanal (12) des mindestens einen Nutverschlusses (10) mit einer der Vielzahl von Nutverschlüssen (10) gegenüberliegenden Seite des zweiten Dichtflansches (21') fluidisch verbindet, und/oder
das Verfahren ferner ein Verschweißen oder Verkleben des ersten Dichtflansches und der Vielzahl von Nutverschlüssen und/oder ein Verschweißen oder Verkleben des zweiten Dichtflansches und der Vielzahl von Nutverschlüssen umfasst, und/oder
alle Herstellschritte in einem Laser-Sinter-Prozess durchgeführt werden, sodass der Kronenkühler (20) einstückig hergestellt ist, und/oder
alle Herstellschritte in einem Spritzgussverfahren durchgeführt werden, und/oder
alle Herstellschritte mit einem Thermoplast-Material, in das ein wärmeleitendes Material eingearbeitet ist, durchgeführt werden.

## Claims

1. A slot closure (10) for an electrical machine (100) comprising a stator (110) having at least one stator slot (111), wherein at least one electrical stator winding (112) is received in the stator slot (111), and wherein the slot closure (10) closes the at least one stator slot (111) at least in sections, the slot closure (10) comprising:
at least one cooling channel (12) through which a fluid can flow for cooling the stator winding (112),
**characterised in that** the slot closure (10) further comprises:
a turbulator (30) arranged in the cooling channel (12) and configured to swirl the fluid flowing through the cooling channel (12) by means of a plurality of swirl elements (32) and/or a spirally arranged continuous swirl element (32).

2. The slot closure (10) according to claim 1, wherein the turbulator (30) is formed integrally with a wall of the cooling channel (12).

3. The slot closure (10) according to claim 1 or 2, wherein the turbulator (30) comprises a core (31) extending in a longitudinal direction of the cooling channel (12), wherein at least one of the swirl elements (32) is arranged on the core (31) of the turbulator (30) and/or on a wall (11) of the cooling channel (12), or
wherein at least one of the swirl elements (32) is arranged on a wall (11) of the cooling channel (12).

4. A crown cooler (20) for an electrical machine (100) comprising a stator (110) having a plurality of stator slots (111), wherein at least one electrical stator winding (112) is received in each stator slot (111), the crown cooler (20) comprising:
a first sealing flange (21) having a face (24), and
a plurality of slot closures (10) according to any one of claims 1 to 3, wherein the slot closures (10) are arranged on a first side of the first sealing flange (21),
wherein the first sealing flange (21) has at least one opening (25) in the face (24) which fluidically connects the cooling channel (12) of the at least one slot closure (10) to a side of the first sealing flange (21) opposite the plurality of slot closures (10).

5. The crown cooler (20) according to claim 4, wherein the crown cooler (20) is manufactured in one piece.

6. The crown cooler (20) according to claim 4 or 5, wherein the first sealing flange (21) comprises:
a first ring element (22), and
a second ring element (23) arranged concentrically to the first ring element (22),
wherein the face (24) is an annular face (24) and is disposed between the first ring element(22) and the second ring element(23).

7. The crown cooler (20) according to claim 6, wherein the first and second ring members (22, 23) and the annular face (24) form an annular fluid channel (26) fluidly connected to the cooling channel (12) of the at least one slot closure (10) via the at least one opening (25), and
wherein preferably the first ring element (22) has a sealing element (22a) on an inner side and/or an outer side facing the second ring element (23), and the second ring element (23) has a sealing element (23a) on an outer side and/or an inner side facing the first ring element (22).

8. The crown cooler (20) according to claim 6, wherein said first sealing flange (21) further comprises:
a third ring element (28) disposed between the first and second ring elements (22, 23) and concentric with the first and second ring elements (22, 23), the third ring element (28) comprising at least one aperture (45) and a connecting wall (46) spaced from the face (24) and connecting the third ring element (28) to the first ring element (22),
wherein the third ring element (28) defines with the first ring element(22) and the connecting wall (46) a first annular fluid channel section (26), and with the second ring element(23) a second annular fluid channel section (29), and
wherein the first annular fluid channel section (26) is fluidically connected to the cooling channel (12) of at least one slot closure (10) via the at least one opening (25), and the second annular fluid channel section (29) is fluidically connected to the cooling channel (12) of at least one further slot closure (10) via the opening (45) in the third ring element (28) and via one of the at least one opening (25) in the face (24), or
wherein the cooling channel (12) of a slot closure (10) and the associated opening (25) in the face (24) are each separated into a first and a second section by a partition (12') extending in the longitudinal direction of the slot closure (10), wherein the first annular fluid channel section (26) is fluidically connected to the first section of the cooling channel (12) of the slot closure (10) via the first section of the opening (25) in the face (24), and the second annular fluid channel portion (29) is fluidly connected to the second portion of the cooling channel (12) of the slot closure (10) via the opening (45) in the third annular element (28) and via the second portion of the opening (25) in the face (24).

9. The crown cooler (20) according to any one of claims 4 to 8, further comprising:
a second sealing flange (21', 40) having an end face (24'),
wherein the second sealing flange (21', 40) has at least one opening (25') in the face (24') which fluidically connects the cooling channel (12) of the at least one slot closure (10) to a side of the second sealing flange (21') opposite the plurality of slot closures (10).

10. The crown cooler (20) according to claim 9, wherein the second sealing flange (21') has a smaller circumference than the first sealing flange (21).

11. The crown cooler (20) according to claim 9 or 10, wherein the second sealing flange (40) is interrupted at least once in the circumferential direction and has, on the side of the face (24') opposite the plurality of slot closures (10), a closed fluid channel section (41) which fluidically connects the openings (25') associated with two adjacent slot closures (10).

12. The crown cooler (20) according to any one of claims 4 to 11, further comprising:
at least one turbulator (30) arranged in the cooling channel (12) of the at least one slot closure (10) and configured to swirl the fluid flowing through the cooling channel (12) of the at least one slot closure (10).

13. An electrical machine (100) comprising a stator (110), wherein the stator (110) comprises at least one stator winding (112) and corresponding stator slots (111), and wherein at least one stator slot (111) comprises a slot closure (10) according to any one of claims 1 to 3, or the stator (110) comprises a crown cooler (20) according to any one of claims 4 to 12.

14. A method of manufacturing a crown cooler (20) comprising:
manufacturing (S205) a first sealing flange (21) having a face (24) and at least one opening (25) in the face (24); and
manufacturing (S210) a plurality of slot closures (10) on a first side of the first sealing flange (21), at least one of the plurality of slot closures (10) having at least one cooling channel (12) through which a fluid can flow and a turbulator (30) which is arranged in the cooling channel (12) and is configured to swirl the fluid flowing through the cooling channel (12) by means of a plurality of swirl elements (32) and/or a continuous swirl element (32) arranged in a spiral,
wherein the at least one opening (25) in the first sealing flange (21) fluidically connects the cooling channel (12) of the at least one slot closure (10) to a side of the first sealing flange (21) opposite the plurality of slot closures (10).

15. The method according to claim 14, wherein
the method further comprises manufacturing (S215) a second sealing flange (21') having a face (24') and at least one opening (25') in the face (24') fluidly connecting the cooling channel (12) of the at least one slot closure (10) to a side of the second sealing flange (21') opposite to the plurality of slot closures (10), and/or
the method further comprises welding or bonding the first sealing flange and the plurality of slot closures and/or welding or bonding the second sealing flange and the plurality of slot closures, and/or
all manufacturing steps are carried out in a laser-sintering process so that the crown cooler (20) is manufactured in one piece, and/or
all manufacturing steps are carried out in an injection moulding process,
and/or
all manufacturing steps are carried out with a thermoplastic material in which a thermally conductive material is incorporated.

## Revendications

1. Fermeture d'encoche (10) pour une machine électrique (100) comprenant un stator (110) muni d'au moins une encoche de stator (111), dans laquelle au moins un enroulement électrique de stator (112) est reçu dans l'encoche de stator (111), et dans laquelle la fermeture d'encoche (10) ferme au moins sur certaines parties ladite au moins une encoche de stator (111), la fermeture d'encoche (10) comprenant :
au moins un canal de refroidissement (12) susceptible d'être parcouru par un fluide pour refroidir l'enroulement de stator (112),
**caractérisée en ce que** la fermeture d'encoche (10) comprend en outre :
un turbulateur (30) disposé dans le canal de refroidissement (12) et conçu pour mettre en turbulence le fluide s'écoulant à travers le canal de refroidissement (12) au moyen de plusieurs éléments de turbulence (32) et/ou d'un élément de turbulence continu (32) disposé en spirale.

2. Fermeture d'encoche (10) selon la revendication 1, dans laquelle le turbulateur (30) est formé d'une seule pièce avec une paroi du canal de refroidissement (12).

3. Fermeture d'encoche (10) selon la revendication 1 ou 2, dans laquelle le turbulateur (30) comprend un noyau (31) s'étendant dans la direction longitudinale du canal de refroidissement (12), dans laquelle au moins un des éléments de turbulence (32) est disposé sur le noyau (31) du turbulateur (30) et/ou sur une paroi (11) du canal de refroidissement (12), ou
dans laquelle au moins un des éléments de turbulence (32) est disposé sur une paroi (11) du canal de refroidissement (12).

4. Refroidisseur en couronne (20) pour une machine électrique (100) comprenant un stator (110) muni d'une pluralité d'encoches de stator (111), dans lequel au moins un enroulement électrique de stator (112) est reçu dans chaque encoche de stator (111), le refroidisseur en couronne (20) comprenant :
une première bride d'étanchéité (21) comprenant une face frontale (24), et
une pluralité de fermetures d'encoche (10) selon l'une des revendications 1 à 3, les fermetures d'encoche (10) étant disposées sur un premier côté de la première bride d'étanchéité (21),
dans lequel la première bride d'étanchéité (21) comprend au moins une ouverture (25) dans la face frontale (24), qui relie fluidiquement le canal de refroidissement (12) de ladite au moins une fermeture d'encoche (10) à un côté de la première bride d'étanchéité (21) opposé à la pluralité de fermetures d'encoche (10).

5. Refroidisseur en couronne (20) selon la revendication 4, dans lequel le refroidisseur en couronne (20) est réalisé d'une seule pièce.

6. Refroidisseur en couronne (20) selon la revendication 4 ou 5, dans lequel la première bride d'étanchéité (21) comprend :
un premier élément annulaire (22), et
un deuxième élément annulaire (23) disposé concentriquement au premier élément annulaire (22),
dans lequel la face frontale (24) est une face frontale annulaire circulaire (24) et est disposée entre le premier élément annulaire (22) et le deuxième élément annulaire (23).

7. Refroidisseur en couronne (20) selon la revendication 6, dans lequel les premier et deuxième éléments annulaires (22, 23) et la face frontale annulaire circulaire (24) forment un canal de fluide annulaire (26) qui est en liaison fluidique par l'intermédiaire de ladite au moins une ouverture (25) avec le canal de refroidissement (12) de ladite au moins une fermeture d'encoche (10), et,
dans lequel, de préférence, le premier élément annulaire (22) comprend un élément d'étanchéité (22a) sur un côté intérieur et/ou sur un côté extérieur tourné vers le deuxième élément annulaire (23), et le deuxième élément annulaire (23) comprend un élément d'étanchéité (23a) sur un côté extérieur et/ou sur un côté intérieur tourné vers le premier élément annulaire (22).

8. Refroidisseur en couronne (20) selon la revendication 6, dans lequel la première bride d'étanchéité (21) comprend en outre :
un troisième élément annulaire (28) disposé entre les premier et deuxième éléments annulaires (22, 23) et de façon concentrique aux premier et deuxième éléments annulaires (22, 23), ledit troisième élément annulaire comprenant au moins une ouverture (45) et une paroi de liaison (46) espacée de la face frontale (24), ladite ouverture reliant le troisième élément annulaire (28) au premier élément annulaire (22),
dans lequel le troisième élément annulaire (28) délimite avec le premier élément annulaire (22) et la paroi de liaison (46) une première partie de canal de fluide annulaire (26), et délimite avec le deuxième élément annulaire (23) une deuxième partie de canal de fluide annulaire (29), et
dans lequel la première partie de canal de fluide annulaire (26) est en liaison fluidique avec le canal de refroidissement (12) d'au moins une fermeture d'encoche (10) par l'intermédiaire de ladite au moins une ouverture (25), et la deuxième partie de canal de fluide annulaire (29) est en liaison fluidique avec le canal de refroidissement (12) d'au moins une autre fermeture d'encoche (10) par l'intermédiaire de l'ouverture (45) dans le troisième élément annulaire (28) et par l'intermédiaire de ladite au moins une ouverture (25) dans la face frontale (24), ou
dans lequel le canal de refroidissement (12) d'une fermeture d'encoche (10) et l'ouverture (25) associée dans la face frontale (24) sont séparés en une première et une deuxième partie respectivement par une paroi de séparation (12') s'étendant dans la direction longitudinale de la fermeture d'encoche (10), dans lequel la première partie de canal de fluide annulaire (26) est en liaison fluidique avec la première partie du canal de refroidissement (12) de la fermeture d'encoche (10) par l'intermédiaire de la première partie de l'ouverture (25) dans la face frontale (24), et la deuxième partie de canal de fluide annulaire (29) est en liaison fluidique avec la deuxième partie du canal de refroidissement (12) de la fermeture d'encoche (10) par l'intermédiaire de l'ouverture (45) dans le troisième élément annulaire (28) et par l'intermédiaire de la deuxième partie de l'ouverture (25) dans la face frontale (24).

9. Refroidisseur en couronne (20) selon l'une des revendications 4 à 8, comprenant en outre :
une deuxième bride d'étanchéité (21', 40) comprenant une face frontale (24'),
dans lequel la deuxième bride d'étanchéité (21', 40) comprend au moins une ouverture (25') dans la face frontale (24'), qui relie fluidiquement le canal de refroidissement (12) de ladite au moins une fermeture d'encoche (10) à un côté de la deuxième bride d'étanchéité (21') opposé à la pluralité de fermetures d'encoche (10).

10. Refroidisseur en couronne (20) selon la revendication 9, dans lequel la deuxième bride d'étanchéité (21') présente une circonférence plus petite que la première bride d'étanchéité (21).

11. Refroidisseur en couronne (20) selon la revendication 9 ou 10, dans lequel la deuxième bride d'étanchéité (40) est interrompue au moins une fois dans la direction circonférentielle et comprend, sur le côté de la face frontale (24') opposé à la pluralité de fermetures d'encoche (10), une partie de canal de fluide fermée (41) reliant fluidiquement les ouvertures (25') associées à deux fermetures d'encoche (10) adjacentes.

12. Refroidisseur en couronne (20) selon l'une des revendications 4 à 11, comprenant en outre :
au moins un turbulateur (30) disposé dans le canal de refroidissement (12) de ladite au moins une fermeture d'encoche (10) et conçu pour mettre en turbulence le fluide s'écoulant à travers le canal de refroidissement (12) de ladite au moins une fermeture d'encoche (10).

13. Machine électrique (100) comportant un stator (110), dans laquelle le stator (110) comprend au moins un enroulement de stator (112) ainsi que des encoches de stator (111) correspondantes, et dans laquelle au moins une encoche de stator (111) comprend une fermeture d'encoche (10) selon l'une des revendications 1 à 3, ou dans laquelle le stator (110) comprend un refroidisseur en couronne (20) selon l'une des revendications 4 à 12.

14. Procédé de fabrication d'un refroidisseur en couronne (20), comprenant les étapes de :
fabriquer (S205) une première bride d'étanchéité (21) comprenant une face frontale (24) et au moins une ouverture (25) dans la face frontale (24) ; et
fabriquer (S210) une pluralité de fermetures d'encoche (10) sur un premier côté de la première bride d'étanchéité (21), dans lequel au moins une de la pluralité de fermetures d'encoche (10) comprend au moins un canal de refroidissement (12) susceptible d'être parcouru par un fluide et un turbulateur (30) disposé dans le canal de refroidissement (12) et conçu pour mettre en turbulence le fluide s'écoulant à travers le canal de refroidissement (12) au moyen de plusieurs éléments de turbulence (32) et/ou d'un élément de turbulence continu (32) disposé en spirale,
dans lequel ladite au moins une ouverture (25) dans la première bride d'étanchéité (21) relie fluidiquement le canal de refroidissement (12) de ladite au moins une fermeture d'encoche (10) à un côté de la première bride d'étanchéité (21) opposé à la pluralité de fermetures d'encoche (10).

15. Procédé selon la revendication 14, dans lequel
le procédé comprend en outre l'étape de fabriquer (S215) une deuxième bride d'étanchéité (21') comprenant une face frontale (24') et au moins une ouverture (25') dans la face frontale (24'), qui relie fluidiquement le canal de refroidissement (12) de ladite au moins une fermeture d'encoche (10) à un côté de la deuxième bride d'étanchéité (21') opposé à la pluralité de fermetures d'encoche (10), et/ou
le procédé comprend en outre l'étape de souder ou coller la première bride d'étanchéité et la pluralité de fermetures d'encoche et/ou de souder ou coller la deuxième bride d'étanchéité et la pluralité de fermetures d'encoche, et/ou
toutes les étapes de fabrication sont exécutées dans un processus de frittage par laser de telle sorte que le refroidisseur en couronne (20) soit fabriqué d'une seule pièce, et/ou
toutes les étapes de fabrication sont exécutées dans un processus de moulage par injection, et/ou
toutes les étapes de fabrication sont exécutées avec un matériau thermoplastique dans lequel est incorporé un matériau conducteur de la chaleur.
